# EUROPEAN PATENT APPLICATION

(11) **EP 4 465 614 A1**
(43) Date of publication of application: **20.11.2024**
(21) Application number: 22929286.7
(22) Date of filing: 02.03.2022
(51) Int. Cl.: H04L 67/14, H04L 67/12

(54) **WORKFLOW EXECUTION METHOD AND APPARATUS, STORAGE MEDIUM, AND PROGRAM PRODUCT**

(71) Applicant: Siemens Aktiengesellschaft, 80333 München (DE)
(72) Inventor: ZHOU, Zhenhua, Shanghai 200120 (CN); WANG, Ting, Suzhou, Jiangsu 215332 (CN); ZHU, Xiaoxun, Beijing 100102 (CN)
(74) Representative: Isarpatent
(86) International application number: PCT/CN2022/078819
(87) International publication number: WO 2023/164835

(57) **Abstract**

Disclosed in embodiments of the present application are a workflow execution method and apparatus, a storage medium, and a program product. The method comprises: obtaining a workflow and configuration information, wherein the workflow is generated on the basis of a behavior tree construction operation performed by a user on a graphical user interface; configuring, on the basis of the configuration information, a helper process adapted to provide a resource for the workflow, wherein the helper process is adapted to carry a persistent connection with the resource; and generating a function block process adapted to execute a function block in the workflow, wherein the function block process is adapted to carry a first idempotent short connection with the helper process and/or a second idempotent short connection with the resource, wherein the helper process is decoupled from the function block process. By decoupling the helper process from the function block process, real-time control logic can be implemented on the basis of a speed-limited workflow.

## Description

### TECHNICAL FIELD

Embodiments of the present application relate to the field of industrial technologies, and in particular, to a workflow execution method and apparatus, a storage medium, and a program product.

### BACKGROUND

A workflow may be simply defined as a description of a series of operation processes. The workflow is widely applied to fields such as an automation system, artificial intelligence, robotics, and the like. For example, a workflow of a product sorting line in the automation system may be simply described as starting, taking a photo, classification, and moving a product to a target position. A model deployment workflow in the field of artificial intelligence may be described as data collection, data annotation, model training, and model deployment.

However, currently, there are only text descriptions for these workflows. If a user intends to execute such a workflow, a text description needs to be followed, and a plurality of types of engineering tools may be used. However, these tools are almost unrelated to each other and provide completely different user operation behaviors. This is a challenge to the user, and due to a long development cycle, costs are greatly increased, efficiency is reduced, and flexibility is limited. For example, in the field of artificial intelligence, a user needs to use a tool for data collection, manually perform or use another tool for data annotation, and write a python script for model training, and further needs a deployment tool for deployment.

Therefore, those skilled in the art are further committed to searching for other workflow solutions.

### SUMMARY

Embodiments of the present application provide a workflow execution method and apparatus, a storage medium, and a program product.

According to a first aspect, an implementation of the present invention provides a workflow execution method. The method includes:
obtaining a workflow and configuration information, where the workflow is generated based on a behavior tree construction operation performed by a user on a graphical user interface;
configuring, based on the configuration information, a auxiliary process adapted to provide a resource for the workflow, where the auxiliary process is adapted to host a long connection with the resource; and
generating a function block process adapted to execute a function block in the workflow, where the function block process is adapted to host a first idempotent short connection with the auxiliary process and/or a second idempotent short connection with the resource, and the auxiliary process is decoupled from the function block process.

It can be learned that, in this implementation of the present invention, by decoupling the auxiliary process from the function block process, real-time control logic can be implemented based on a speed-limited workflow.

In an example implementation, the method further includes:
enabling, during execution of a start node of the workflow, the auxiliary process to establish the long connection.

Therefore, the auxiliary process establishes the long connection when execution of the workflow is started, so that an overall running speed of the workflow is improved. In an example implementation, the method further includes:
enabling, during execution of an end node of the workflow, the auxiliary process to disconnect the long connection.

Therefore, the auxiliary process disconnects the long connection when execution of the workflow ends, so that a connection resource is saved.

In an example implementation, when the function block process needs to access the resource, the function block process is enabled to establish the first idempotent short connection, to call the auxiliary process through the first idempotent short connection, so as to access the resource through the long connection, or the function block process is enabled to establish the second idempotent short connection, to access the resource through the second idempotent short connection.

It can be learned that, the function block may access the resource through the first idempotent short connection and the long connection, or may access the resource directly through the second idempotent short connection. There are a plurality of implementations.

In an example implementation, when the function block process needs to end accessing the resource, the function block process is enabled to end the first idempotent short connection and/or end the second idempotent short connection.

Therefore, when accessing the resource ends, the function block may further end the idempotent short connection to save a connection resource.

In an example implementation, the function block process calls the long connection through a caller that has interoperability; and the resource includes at least one of the following:
hardware detection data; software running in an internal storage; and a hardware driver.

Therefore, data may be conveniently exchanged between the function block process and the auxiliary process through the caller, and a capability that different computer systems, networks, operating systems, and application programs work together and share information can be implemented based on the interoperability.

In an example implementation, the method further includes:
generating, based on the configuration information, a real-time operation process adapted to be called by the function block process, where the real-time operation process is adapted to host a long connection with the resource and provide a real-time operation capability that is based on the resource; and
enabling, when the function block process needs to be provided with the real-time operation capability, the function block process to establish a third idempotent short connection, to call the real-time operation process through the third idempotent short connection, so as to obtain the real-time operation capability.

Therefore, the real-time operation process is generated, so that the function block process can further have the real-time operation capability.

According to a second aspect, an implementation of the present invention provides a workflow execution apparatus. The apparatus includes:
an obtaining module, configured to obtain a workflow and configuration information, where the workflow is generated based on a behavior tree construction operation performed by a user on a graphical user interface;
a configuration module, configured to configure, based on the configuration information, a auxiliary process adapted to provide a resource for the workflow, where the auxiliary process is adapted to host a long connection with the resource; and
a generation module, configured to generate a function block process adapted to execute a function block in the workflow, where the function block process is adapted to host a first idempotent short connection with the auxiliary process and/or a second idempotent short connection with the resource, and the auxiliary process is decoupled from the function block process.

It can be learned that, in this implementation of the present invention, by decoupling the auxiliary process from the function block process, real-time control logic can be implemented based on a speed-limited workflow.

In an example implementation, the generation module is further configured to enable, during execution of a start node of the workflow, the auxiliary process to establish the long connection.

Therefore, the auxiliary process establishes the long connection when execution of the workflow is started, so that an overall running speed of the workflow is improved.

In an example implementation, the generation module is further configured to enable, during execution of an end node of the workflow, the auxiliary process to disconnect the long connection.

Therefore, the auxiliary process disconnects the long connection when execution of the workflow ends, so that a connection resource is saved.

In an example implementation, the generation module is further configured to: when the function block process needs to access the resource, enable the function block process to establish the first idempotent short connection, to call the auxiliary process through the first idempotent short connection, so as to access the resource through the long connection, or enable the function block process to establish the second idempotent short connection, to access the resource through the second idempotent short connection.

It can be learned that, the function block may access the resource through the first idempotent short connection and the long connection, or may access the resource directly through the second idempotent short connection. There are a plurality of implementations.

In an example implementation, the generation module is further configured to: when the function block process needs to end accessing the resource, enable the function block process to end the first idempotent short connection and/or end the second idempotent short connection.

Therefore, when accessing the resource ends, the function block may further end the idempotent short connection to save a connection resource.

In an example implementation, the function block process calls the long connection through a caller that has interoperability; and the resource includes at least one of the following:
hardware detection data; software running in an internal storage; and a hardware driver.

Therefore, data may be conveniently exchanged between the function block process and the auxiliary process through the caller, and a capability that different computer systems, networks, operating systems, and application programs work together and share information can be implemented based on the interoperability.

In an example implementation, the generation module is further configured to generate, based on the configuration information, a real-time operation process adapted to be called by the function block process, where the real-time operation process is adapted to host a long connection with the resource and provide a real-time operation capability that is based on the resource; and enable, when the function block process needs to be provided with the real-time operation capability, the function block process to establish a third idempotent short connection, to call the real-time operation process through the third idempotent short connection, so as to obtain the real-time operation capability.

Therefore, the real-time operation process is generated, so that the function block process can further have the real-time operation capability.

According to a third aspect, an implementation of the present invention provides a workflow execution apparatus, including: at least one memory, configured to store computer-readable code; and at least one processor, configured to call the computer-readable code, to perform the steps of the workflow execution method according to any one of the foregoing implementations.

According to a fourth aspect, an implementation of the present invention provides a computer-readable medium. The computer-readable medium stores computer-readable instructions. When executed by a processor, the computer-readable instructions enable the processor to perform the steps of the workflow execution method according to any one of the foregoing implementations.

According to a fifth aspect, an implementation of the present invention provides a computer program product. The computer program product is tangibly stored in a computer-readable medium and includes computer-readable instructions. When executed, the computer-readable instructions enable at least one processor to perform the steps of the workflow execution method according to any one of the foregoing implementations.

### BRIEF DESCRIPTION OF THE DRAWINGS

FIG. 1A is an example flowchart of a workflow creation method according to embodiments of the present application.
FIG. 1B is an example diagram of a resource knowledge graph according to an example of the present application.
FIG. 1C is an example diagram of associating each resource node with a function block node according to an example of the present application.
FIG. 2A is a diagram of a constructed behavior tree according to an example of the present application.
FIG. 2B to FIG. 2S are respective diagrams of some of behavior trees created according to an example of the present application.
FIG. 2T is an example of constructing a behavior tree based on a function block node of a function block type diagram according to an example of the present application.
FIG. 2U to FIG. 2X are each a diagram of hiding or displaying a data input port or a data output port according to an example of the present application.
FIG. 2Y is a diagram of separately adding a data block in four function block nodes in a behavior tree and displaying corresponding data in each data block according to an example of the present application.
FIG. 3 is a diagram of an example of a structure of a workflow creation system according to an embodiment of the present application.
FIG. 4A to FIG. 4D are diagrams of workflow creation systems according to embodiments of the present application.
FIG. 4E is a diagram of an application scenario of an OT domain low-code development platform 100 in the field of industrial automation.
FIG. 5 is a diagram of hardware implementation of a workflow creation system according to an embodiment of the present application.
FIG. 6 is an example flowchart of a workflow control method according to embodiments of the present application.
FIG. 7A is a first diagram of a low-code example of an FBTD logic compositor according to embodiments of the present application.
FIG. 7B is a second diagram of a low-code example of an FBTD logic compositor according to embodiments of the present application.
FIG. 7C is a diagram of a low-code example of an FBTD logic compositor that has a folding form according to embodiments of the present application.
FIG. 8 is an example flowchart of a workflow execution method according to an embodiment of the present application.
FIG. 9 is an example diagram of a workflow execution process according to an embodiment of the present application.
FIG. 10 is a diagram of an example of a structure of a workflow execution apparatus according to an embodiment of the present application.
FIG. 11 is a diagram of an example of a structure of a workflow execution apparatus that has a memory-processor architecture according to embodiments of the present application.

### Reference numerals are as follows:

| | |
|---|---|
| S11 to S13 | Steps of a workflow creation method |
| 110 | Node library |
| 120 | Graphical interface module |
| 130 | Editing and processing module |
| 140 | Analysis and deployment module |
| 100 | OT domain low-code development platform |
| 10 | OT domain low-code development tool |
| 20 | OT domain microservice generator |
| 30 | Runtime in a main controller of a workcell |
| 40 | Microservice |
| 50 | Third-party apparatus |
| 200 | Knowledge middle platform |
| 201 | Function block name |
| 202 | Function block header |
| 203 | Link input port |
| 204 | Link output port |
| 205 | Link connection |
| 206 | Sensitive area |
| 207 | Instruction label |
| 208 | Input data chunk |
| 209 | Output data chunk |
| 210 | Data input port |
| 211 | Data output port |
| 212 | Data connection |
| 213 | Function block icon |
| 214 | Function block body |
| 215 | Data block label |
| 216 | Data block body |
| 217 | Monitor link |
| 300 | IT domain code development platform |
| 301 | IT domain code development tool |
| 51 | At least one memory |
| 52 | At least one processor |
| 53 | At least one display |
| 54 | Bus |
| 600 | Workflow control method |
| 601 to 603 | Steps |
| 70 | Compositor node |
| 71 | Start block |
| 72 | End block |
| 73 to 75 | Function block node |
| 76 | Composite expression |
| 77 | End logic value |
| 78 to 80 | Data value block |
| 81 | Third display area |
| 82 | Type identifier of a folding compositor |
| 83 | Second display area |
| 84 | Switching control |
| 85 to 86 | Function block node |
| 87 | Composite expression |
| 88 | First display area |
| 90 | Folding frame |
| 800 | Workflow execution method |
| 801 to 803 | Steps |
| 901 | Overall initialization |
| 902 | Real-time registration |
| 903 | Real-time callback |
| 904 | Start a short connection |
| 905 | End a short connection |
| 906 | Reset |
| 907 | Idempotent short connection |
| 908 | Hardware driver short connection |
| 910 | Caller |
| 911 | Interoperability |
| FB1 to FB6 | Function block |
| 921 to 926 | Function block process |
| 927 | Real-time operation process |
| 928 | Hardware monitoring process |
| 929 | Internal storage process |
| 930 | Hardware driving process |
| 931, 940 | Initialization |
| 932 | Hardware driving long connection |
| 933, 942 | Reset |
| 941 | Hardware monitored long connection |
| 950 | Real-time operation short processing |
| 700 | Workflow execution apparatus |
| 701 | Obtaining module |
| 702 | Configuration module |
| 703 | Generation module |
| 500 | Workflow execution apparatus |
| 501 | Memory |
| 502 | Processor |

### DETAILED DESCRIPTION

A subject described in this specification is discussed now with reference to example implementations. It should be understood that, discussion of the implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of embodiments of the present application. Various processes or components may be omitted, replaced, or added in each example according to requirements. For example, the described method may be performed according to a sequence different from the sequence described herein, and various steps may be added, omitted, or combined. In addition, features described in some examples may also be combined in other examples.

As used in this specification, the term "include" and variants thereof represent open terms, and mean "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes in detail embodiments of the present application with reference to the accompanying drawings.

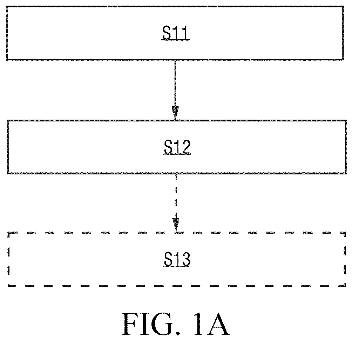

FIG. 1A is an example flowchart of a workflow creation method according to an embodiment of the present application. As shown in FIG. 1A, the method may include the following steps:
Step S11: Receive a behavior tree construction operation performed by a user on a graphical user interface based on a preset behavior tree node.

In this embodiment, one behavior tree is used for representing one workflow, and the workflow is used for defining an operation to be performed by one workcell. For example, the workflow may represent a distributed process in the workcell. During specific implementation, the workflow herein may be further subdivided into a main workflow and a subworkflow. The main workflow is used for limiting start, end, and other flow control that triggers an entire workcell process. The main workflow is an entrance to the entire process and is linked to at least one subworkflow. The subworkflow is generally a major workflow, and each subworkflow corresponds to one sub-process, used to implement a specific service operation.

The workcell may be a combination of resources such as systems or devices that can implement a relatively complete and independent control process and operation. In this embodiment, the workcell is used as the basic unit to create the workflow. This is more consistent with a characteristic of industrial control, can improve an integration degree of development, and reduce complexity of development. For example, the field of industrial technologies is used as an example, the workcell may be defined according to an actual industrial scenario. For example, one work procedure may be defined as corresponding to one workcell, one workstation in the work procedure may be defined as one workcell, or one work position in the workstation may be defined as corresponding to one workcell, and so on. Different workcells have different technological processes.

The behavior tree is a formalized graphical modeling manner. The behavior tree is widely used in various manual types of intelligent decision-making. Since most logic is set according to rules, determining of a behavior is similar to that of a tree, with many determining branches. A behavior of the behavior tree is on a leaf node, and is behavioral logic that actually needs to be executed. Each determining branch is executed from top to bottom, until the execution reaches the leaf node, and behavior node logic that is finally determined to have successful return is executed, to implement the decision-making. This is a basic principle of the behavior tree. In the behavior tree manner, a clearly defined symbol may be used to clearly represent a related requirement of a software integration system. A structure of the behavior tree is organized in a form of a tree, where each node has a corresponding node type, to cooperate with related parameters to host different functions. An intuitive and visual behavior tree editor may be provided for a user by using a component editor manner. The user may quickly edit the behavior tree by using the behavior tree editor. For example, a new behavior tree may be created after the behavior tree editor is started. Then, a type of a behavior tree node is selected in the behavior tree, where attributes of behavior tree nodes that constitute the behavior tree may be further edited.

In this embodiment, the behavior tree node may include: a flow control node, a function block node, and the like. The nodes are separately described in detail below.

### I. Flow control node

The flow control node is configured to implement logic control in a workflow, and is usually independent of a specific service operation in the workcell. A user may create various types of workflows according to requirements of the user through the flow control node.

During specific implementation, the flow control node may include: a main control node, a compositor node (which may also be referred to as an aggregator node or a logic control node), a condition node, and the like. Alternatively, the flow control node may include: one or any combination of a main control node, a compositor node, and a condition node. The nodes are separately described in a simple manner below.

### 1. Main control node

The main control node may include: some or all of a start node, an end node, a goto node, an anchor node, a stop node, and an abort node.

The main control node in this embodiment is not a standard behavior tree element. However, in this embodiment, the main control node may be configured to control a main process of the workflow, and may be linked to a state machine of the workflow. The start node is mandatory. In addition, one of the end node or the goto node may also be mandatory. The main control node is mainly configured to define start and end of the workflow. In addition, another element node may control the state machine (for example, abort and stop) or annotate a key process step (for example, the anchor node) that may be jumped to.

### 2. Compositor node

The compositor node is configured to implement logic control in a workflow. The compositor node may include: some or all of a sequence (Se) node, a reactive sequence (RSe)node, a parallel (Pa) node, an in-process quality control node, a priority (Fallback) node, a reactive priority (Fallback) node, an if-then-else (ITE) node, and a Switch node.

The compositor node may define how to execute a branch in a behavior tree, and is configured to implement branch logic control and the like in the workflow. For example, a typical compositor node is simply described as follows:
(1) Sequence node: The node may have a plurality of child nodes, and routing to the child nodes is sequentially triggered according to a sequence in the workflow.
(2) Reactive sequence node: The node has a function the same as that of the sequence node, but continuously checks a trigger condition.
(3) Parallel node: The node may have one to a plurality of child nodes, started sequentially from top to bottom, and execute all the child nodes simultaneously in a plurality of processes or a plurality of threads.
(4) In-process quality control node: A quality engineer performs quality inspection on some process steps. An exception processing process is performed if the inspection fails, and a next step continues to be performed if the inspection succeeds.
(5) Priority node: Sub-branches are sequentially executed according to priorities. A next sub-branch is executed if execution of a current sub-branch fails, until execution of any sub-branch succeeds.
(6) Reactive priority node: The node has a function the same as that of the priority node, but continuously checks a trigger condition.
(7) If-then-else node: A trigger expression is checked. A true branch is executed if a result is true, and a false branch is executed if a result is false.
(8) Multi-branch selection node: A trigger expression is checked. Different branches are executed according to different conditions, and a default branch is executed if none of the conditions is met.

Generally, the sequence node and the parallel node may drive most of logic in the workflow.

### 3. Condition (C) node

The condition node is generally a basic logic element that checks an expression in the behavior tree, and is configured to perform condition determining and return a determining result. The condition node returns success or failure depending on whether a condition is met. The condition node never returns a running state.

In addition, in another implementation, the condition node may alternatively be included in the function block node. Alternatively, the condition node may be used as a single type of node.

### II. Function block (FB) node

The function block node is configured to execute a command, to implement a service operation in a workflow. Generally, success is returned if the operation is correctly completed. Failure is returned if the operation fails. Running is returned when the operation is performed.

In this embodiment, the function block node includes a logical node, and may further include some specific types of function block nodes. For example, the function block node may include some or all of a manual node, a dynamic node, a delay node, and an Empty (idle) node. The dynamic node is configured to dynamically inject a node instance in a runtime. The manual node represents a manual step. Stopping is performed at a current node before a confirmation signal is obtained, and exiting is performed after the confirmation signal is obtained. The delay node represents that exiting from the current node is performed after specified time delays. The idle node represents that no operation is performed, and a placeholder may be replaced by any function block node. Each logical node may correspond to one operation template. Each operation template predefines an operation that can be performed by at least one type of resource (for example, a device type such as a collaborative robot type or a PLC type). For example, the operation may include: an action, a method, or a skill.

During specific implementation, each operation template may include an interface part and an implementation part. The implementation part may be an application program (for example, a containerized application program), including function code and an execution dependency item. The application program may run independently and be exposed to the outside through a specific network communication interface. The interface part may be a logical node presented as a graphical element, that is, like other behavior tree nodes, the logical node may be dragged and dropped, connected, and configured on a graphical user interface. During specific implementation, each logical node may have a parameter panel, configured to configure parameters of the logical node, for example, input and output parameters. Certainly, these input and output parameters may alternatively be preset with default values.

Each logical node may be configured and executed separately. When a logical node in a behavior tree is executed, an input configured by a user for the logical node is read and transmitted to the implementation part, that is, a corresponding application program, of the operation template. After a specific operation such as model conversion is completed, an operation result such as a converted model is converted back to an output of the logical node.

In this embodiment, the interface part and the implementation part of each operation template may be separately stored. For example, a node library may store only the interface part, namely, the logical node, and the implementation part thereof may be stored in a node service module. In this embodiment, the node service module may be referred to as runtime. The node service module may be located in a server or may be locally located.

Optionally, the logical node follows an information model of a runtime interaction with the main controller. In this way, standardization of communication between an OT domain workflow and main controllers of various OT devices is implemented.

In addition, it is considered that a service operation corresponding to a function block node may be performed by different entities, for example, a specific physical device, a person, or another virtualized term resource. For ease of description, the physical device, the person, the virtualized term resource, and the like are collectively referred to as resources in this specification. These resources are generally resources that can perform a workflow in the field as operation entities.

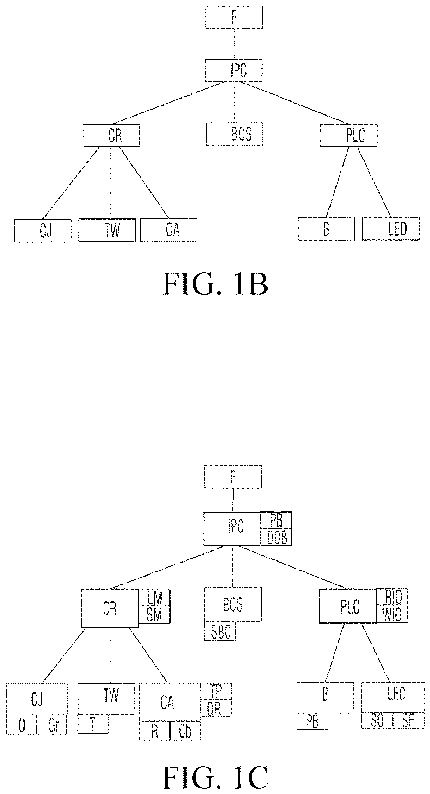

During specific implementation, a resource used as an operation execution entity may be used as an ordinary configuration parameter of the function block node, to configure a corresponding resource for a required function block node during creation of the behavior tree. Alternatively, a resource used as an operation execution entity is configured for the function block node when the function block node is created. In this way, there is no need to configure a resource for a required function block node during creation of the behavior tree. Alternatively, to facilitate management of the resources, these resources may alternatively be represented in a form of resource nodes, and these resource nodes may be stored in a form of a resource knowledge graph. The resource knowledge graph includes: the resource nodes, and a connection line representing a relationship between the resource nodes. For example, FIG. 1B is an example diagram of a resource knowledge graph according to an example. As shown in FIG. 1B, the resource knowledge graph is a factory resource knowledge graph, that is, describes a real system configuration of a factory. The factory (F) node has an industrial personal computer (IPC) node, and the industrial personal computer (IPC) node has a collaborative robot (CR) node, a PLC node, and a bar code scanner (BCS) node. The collaborative robot (CR) node has a clamping jaw (CJ) node, a torque wrench (TW) node, and a camera (CA) node. The PLC node has a button (B) node and an LED warning light node. Certainly, in some applications, there may be more than one device of a specific type of device such as a collaborative robot. In this case, each device of the specific type of device may be distinguished by a reference number, a model number, or the like. Details are not described herein.

For each function block node, the function block node may be instantiated as an operation of a corresponding resource by being associating with a resource node. For example, a specific logical node may be instantiated as an operation of a corresponding device by being associated with a device resource node. During specific implementation, a resource header may be set for the function block node, and a resource associated with the function block node is displayed in the resource header.

A specific association process may be implemented in a plurality of different implementations. For example, each resource node may be pre-associated with a corresponding function block node. In this way, during creation of the behavior tree, a function block node associated with a corresponding resource may be directly pulled, and there is no need to temporarily perform configuration. For example, FIG. 1C is an example diagram of associating each resource node with a function block node according to an example. As shown in FIG. 1C, for the resources shown in the resource knowledge graph shown in FIG. 1B, corresponding function block nodes are respectively associated. A press button (PB) node and a display dialog box on screen (DDB) node are associated with the industrial personal computer (IPC) node. A linear move (LM) node and a shutdown mobile (SM) node are associated with the collaborative robot (CR, ) node. A read I/O (RIO) node and a write I/O (WIO) node are associated with the PLC node. A scan bar code (SBC) node is associated with the bar code scanner (BCS) node. An open (O) node and a grab (Gr) node are associated with the clamping jaw (CJ) node. A twist (T) node is associated with the torque wrench (TW) node. A register (R) node, a calibration (Cb) node, a take photo (TP) node, and an object recognition (OR) node are associated with the camera (CA) node. A press button (PB) node is associated with the button (B) node. A switch on (SO) node and a switch off (SF) node are associated with the LED warning light node.

Alternatively, a function block node may not be pre-associated with a resource node, but a required function block node may be associated with a corresponding resource node during creation of the behavior tree.

Alternatively, there may be both a function block node (which may be referred to as a dedicated function block node) with which a resource node is pre-associated and a function block node (which may be referred to as a general-purpose function block node) with which a resource node is not associated. Although a general-purpose function block node has no associated field resource, analog simulation of a workflow corresponding to a behavior tree including the function block node is not affected. For example, it is possible a specific collaborative robot has not bee purchased, to verify implementability, simulation may be performed by pre-using a corresponding general-purpose function block node. Purchasing may be started when it is determined that implementability exists.

In addition, in this embodiment, the following decorator node may be further included:

### III. Decorator node

The decorator node is mainly configured to decorate a function block node driven by a compositor node, for example, may be configured to determine whether a branch or even a single node in a behavior tree may be executed; and may include: some or all of a repeat (Rp) node, a retry (Rt) node, a one-shot (OS) node, a timeout (TO) node, a timer (Tm) node, an inverter (Iv) node, a force run (FR) node, a force OK (FO) node, a force failed (FF) node, and a guard (G) node. The following briefly describes some decorator nodes thereof:
(1) Inverter node: The node may have one child node, and is configured to invert the child node. Success is returned if the child node fails. Failure is returned if the child node succeeds.
(2) Force OK node: The node may have one child node (for example, a function block node). The node always returns success regardless of whether the child node succeeds.
(3) Force failed node: The node may have one child node (for example, a function block node). The node always returns failure regardless of whether the child node succeeds.
(4) Repeat node: The node may have one child node (for example, a function block node), and may repeatedly execute the child node thereof for a fixed quantity of times.
(5) Retry node: The node may have one child node (for example, a function block node), and may trigger the child node thereof for a maximum of N times. If the child node thereof returns failure, retrying is performed and a quantity of times is reduced by one. Success is returned when a quantity of retrying times is zero. If the child node returns success, the loop is interrupted, and success is also returned. N is a positive integer.
(6) One-shot node: The node may have one child node, and represents that the child node thereof is executed only once in a workflow, and is not executed before the workflow is restarted.
(7) Timeout node: The node may have one child node, is configured to time execution time of the child node (for example, a function block node) thereof, and exits from the execution (even if execution is not completed) after specified time expires.
(8) Timer node: The node may have one child node, and executes the child node (for example, a function block node) thereof after reaching specified time is implemented.
(9) Force run node: The node may have one child node, and forces a return to a running state regardless of whether execution of the child node (for example, a function block node) is completed.
(10) Guard node: The node may have at least one child node, and is configured to guard statuses of all child nodes thereof. When execution of any child node has an error, the error is reported. Normality is returned only when all child nodes are normal.

In another implementation, the decorator node may alternatively be included in a flow control node. To be specific, the flow control node may include: all or some of a main control node, a compositor node, and a decorator node.

In this embodiment, the behavior tree nodes may be listed in forms of icons on a graphical user interface. A user may determine, by selecting and dragging an icon to add the icon to a canvas, a node required to create a workflow. Further, necessary parameter configuration, such as resource configuration and/or input/output parameter configuration, may be further performed on the node. If there is more than one operation to be performed by a workcell, to be specific, there is more than one operation defined in a required workflow, a behavior tree corresponding to the workflow may include a plurality of function block nodes. According to an order of and an interrelationship between the operations, a corresponding flow control node may be set, and a behavior tree corresponding to the workflow is finally generated by making a corresponding arrangement connection to a dragged node. That is, the behavior tree construction operation includes a behavior tree node addition and connection operation. Further, an operation of associating an added function block node with a resource may be further included. In addition, the following may be further included: a configuration operation on input and output parameters of the behavior tree node.

Step S12: Generate, in response to the behavior tree construction operation, a behavior tree corresponding to a workflow, where a logical node in the behavior tree is instantiated as an operation of a corresponding device.

In this embodiment, in response to the behavior tree construction operation, each behavior tree node may be instantiated, and a connection relationship between instantiated behavior tree nodes is established. For example, this step is performed, so that the added logical node may be instantiated as the operation of the corresponding device. Then, the behavior tree corresponding to the workflow is generated based on the connection relationship between the instantiated behavior tree nodes.

During specific implementation, the foregoing behavior tree nodes may be stored in a node library. In addition, for a similar application scenario, to avoid wastes of human power, time, and the like caused by repeated construction of behavior trees, a behavior tree (or an uninstantiated behavior tree framework) that is of a corresponding workflow or a corresponding subworkflow and that is already constructed by a user and preferably debugged or run successfully is stored as a workflow node or a subworkflow node. Correspondingly, the node library may further include a workflow (WF) node and a subworkflow (SWF) node. When the user needs to construct a similar behavior tree or construct a behavior tree including the workflow or the subworkflow, a corresponding workflow node or subworkflow node may be selected and necessary configuration may be performed thereon to obtain a behavior tree for implementing a required workflow.

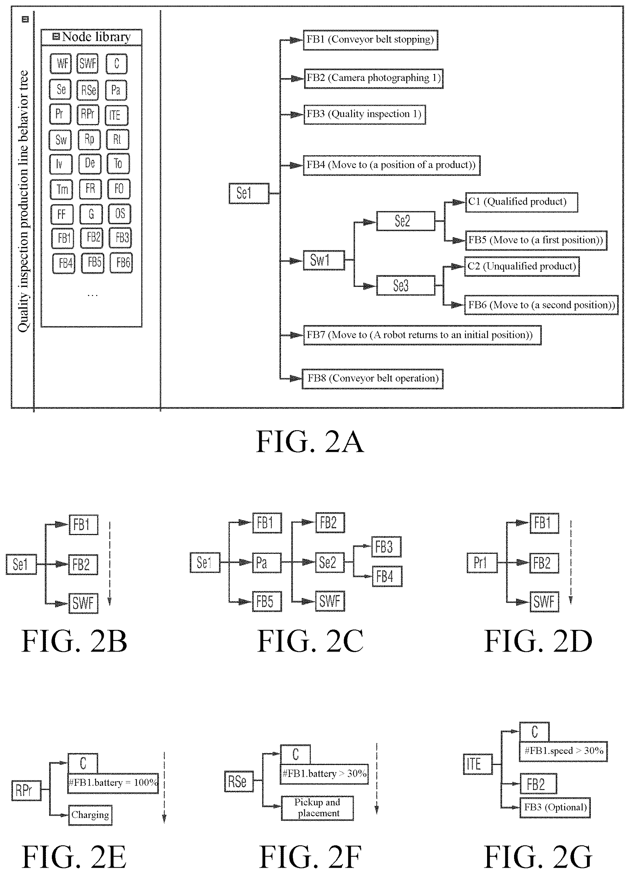

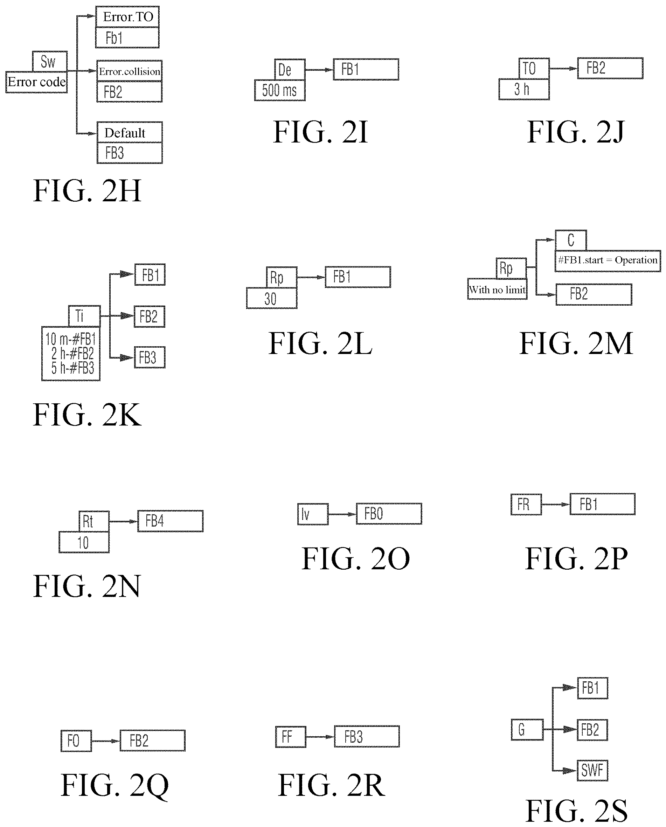

FIG. 2A is a diagram of constructing a behavior tree of a workcell of a quality inspection production line according to an example. FIG. 2B to FIG. 2S are respective diagrams of some of behavior trees constructed according to an example. In the foregoing process of constructing the behavior tree representing the workflow, the function block node may be understood as being presented in a form of a label diagram, and construction of such a behavior tree based on a function block label diagram requires participation of a flow control node and even a decorator node.

In addition, an embodiment of the present invention further provides a method for constructing a behavior tree based on a function block type diagram. In the method, a function block node is presented in a form of a type diagram. During actual application, these two behavior tree construction methods (that is, the method for constructing a behavior tree based on a function block type diagram and the behavior tree construction method in which a function block node is presented by a label diagram) may coexist, and when behavior tree construction is performed in one of the manners, construction is synchronously performed in the other manner. For example, when two function block nodes are sequentially connected based on a function block type diagram, when a behavior tree based on a function block label diagram is synchronously constructed, a sequence node is automatically added, and the two function block nodes are added from top to bottom for the sequence node.

The method for constructing a behavior tree based on a function block type diagram may include step (1) and step (2) in the following:
Step (1): Receive a function block node addition and connection operation performed by a user on a graphical user interface based on a function block type diagram. In the present application, the type diagram and a label diagram may be understood as two presentations of a same function block node, and functions thereof are both used for implementing a corresponding service operation.

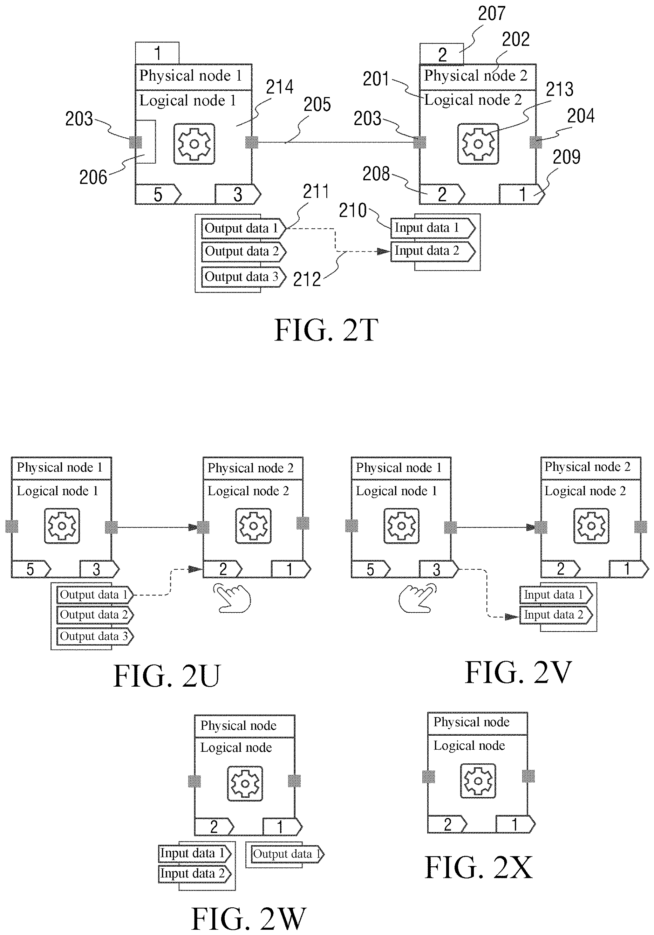

FIG. 2T is an example of constructing a behavior tree by using a function block node based on a function block type diagram according to an example. In this example, two function block nodes F1 and F2 are shown. As shown in FIG. 2T, the function block type diagram may include the following:
(1) Function block name 201 used for indicating a type of a service operation, for example, screw fastening, image collection, video recording, visual guidance, and the like. During specific implementation, when a function block node is dragged from a node library to a canvas, a default function block name is generated by using a default name defined by a function block plus an instance number. In FIG. 2U, logical nodes in the function block node are used as an example, and names are represented by using a "logical node 1" and a "logical node 2". The function block name is editable, but should be unique in a current global workflow.
(2) Function block header 202 used for indicating a resource for performing a service operation, where for example, a resource for performing screw fastening is a torque wrench, a resource for performing image collection is a monitor, a resource for performing video recording is a monitor, a resource for performing a visual guide is a camera, and so on. Generally, the function block header 202 of the logical node is usually a physical resource, for example, a "physical node 1" and a "physical node 2" shown in FIG. 2U. As described above, the resource indicated by the function block header 202 may be pre-associated, or association with a corresponding resource may be completed through resource configuration after the function block node is added.
(3) Link input port 203 and link output port 204 that are configured to trigger a link connection, where in this embodiment, the function block node connection operation may include: a connection operation between the link output port 204 and the link input port 203 that are between the two function block nodes F1 and F2. A link connection 205 is established between the two function block nodes F1 and F2 through the connection operation. The link connection 205 in this example is a unidirectional connection used for indicating a running process of a workflow, for example, may indicate an execution order of two function block nodes, to be specific, the left function block node F1 is executed first and then the right function block node F2 is executed.

During specific implementation, to avoid a click error and improve sensitivity of connecting a function block node, a sensitive area 206, referred to as a first sensitive area herein, exists within a specified range of the link input port 203, and is configured to locate a connection endpoint on the link input port 203 when a click and connection operation of a user are received within the first sensitive area. Similarly, a sensitive area (not shown in the figure), referred to as a second sensitive area herein, may also exist within a specified range of the link output port 204, and is configured to locate a connection endpoint on the link output port 204 when a click and connection operation of a user are received within the second sensitive area.

In addition, in this embodiment, in response to the connection operation between the link output port 204 and the link input port 203 that are between the two function block nodes F1 and F2, an instruction label 207 used for indicating an execution order of function block nodes may be further generated for the function block nodes F1 and F2 connected to each other, and the instruction label 207 is marked on a function block type diagram of the function block nodes F1 and F2, for example, 1 and 2 that are shown in the figure. In addition, the instruction label 207 may be further used as an index of a goto instruction and as a chapter index of a description document.

(4) Input data chunk 208 used for representing a set of all data input ports and output data chunk 209 used for representing a set of all data output ports, where in this embodiment, a quantity of data input ports of a function block node may be marked on the input data chunk 208, for example, 5 on an input data chunk 208 of the function block node F1 and 2 on an input data chunk 208 of the function block node F2. The input data chunk 208 may be hidden if the quantity of data input ports is zero. Similarly, a quantity of data output ports of a function block node may be marked on an output data chunk 209, for example, 3 on an output data chunk 209 of the function block node F1 and 1 on an output data chunk 209 of the function block node F2. The output data chunk 209 may be hidden if the quantity of data output ports is zero. In this embodiment, as shown in FIG. 2U to FIG. 2X, data input ports of the function block node may be expanded or hidden by clicking on the input data chunk 208. Data output ports of the function block node may be expanded or hidden by clicking on the output data chunk 209. FIG. 2U is a diagram of hiding data input ports of a logical node 2 through clicking. FIG. 2V is a diagram of hiding data output ports of a logical node 1 through clicking. FIG. 2W is a diagram of simultaneously displaying data input ports and data output ports. FIG. 2X is a diagram of simultaneously hiding data input ports and data output ports.

(5) Data input port 210 and data output port 211 that are configured to trigger data transmission, where in this embodiment, the function block node connection operation may further include: a connection operation between the data output port 211 and the data input port 210 that are between corresponding data of the two function block nodes F1 and F2. A data connection 212 is established between the two function block nodes F1 and F2 through the connection operation. The data connection 212 in this example is used for indicating data transmission between the two function block nodes F1 and F2. As shown in FIG. 2T, a data connection 212 is established between a data output port 211 of output data 1 of a function block node F1 and a data input port 210 of input data 2 of a function block node F2. That is, it represents that the output data 1 of the function block node F1 serves as the input data 2 of the function block node F2. During specific implementation, similar to a link input/output port, to avoid a click error and improve sensitivity of connecting a function block node, a sensitive area (not shown in the figure), referred to as a third sensitive area herein, may also exist within a specified range of the data input port 210, and is configured to locate a connection endpoint on the data input port 210 when a click and connection operation of a user are received within the third sensitive area. Similarly, a sensitive area (not shown in the figure), referred to as a fourth sensitive area herein, may also exist within a specified range of the data output port 211, and is configured to locate a connection endpoint on the data output port 211 when a click and connection operation of a user are received within the fourth sensitive area.

(6) Function block icon 213, where specifically, the function block icon 213 may be a vector icon 213, and is configured to visually represent a service operation of a function block node. Certainly, in another implementation, the function block icon 213 may alternatively be omitted.

(7) Function block body 214 configured to host the foregoing composition parts, where in this embodiment, the function block node addition operation may include: a drag operation on the function block body 214.

Step (2): Construct, in response to the function block node addition and connection operation, a behavior tree corresponding to a workflow.

In step (2), in response to the function block node addition and connection operation, a behavior tree including a flow control node and a function block node that is based on a function block label diagram in S12A may be synchronously constructed. Similarly, when the behavior tree including the flow control node and the function block node that is based on the function block label diagram is constructed in step S12A, a behavior tree based on a function block type diagram in S12B may also be synchronously constructed. In addition, the two behavior tree construction interfaces may be switched according to a user selection. For example, according to a click operation of a user on the behavior tree based on the function block type diagram or the behavior tree based on the function block label diagram, the behavior tree based on the function block type diagram or the behavior tree based on the function block label diagram may be switched and displayed.

Further, in another implementation, whether creation of the behavior tree is performed based on a function block node in a form of a label diagram or a function block node in a form of a type diagram, at least one data block may be further added and connected to each of at least one function block node in the behavior tree. Each data block is used for presenting corresponding data in a service operation of a function block node connected to the data block. A type of the data block may include some or all of a data pair, a data sheet, an image, a video, a chart, and the like.

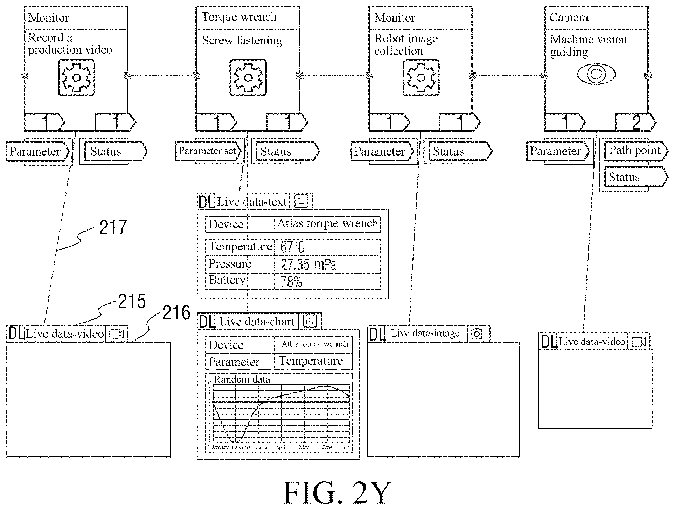

FIG. 2Y is a diagram of separately adding a data block in four function block nodes in a behavior tree and displaying corresponding data in each data block according to an example of the present application. In this example, a behavior tree creation interface based on a function block type diagram is used as an example. As shown in FIG. 2Y, in this example, a data block of a type of live data-video is added in a function block node that is for recording a production video and that is associated with a monitor. A data block of a type of live data-text and a data block of a type of live data-chart are added in a function block node that is for screw fastening and that is associated with a torque wrench. A data block of a type of live data-image is added in a function block node that is for robot image collection and that is associated with a monitor. A data block of a type of live data-video is added in a function block node that is for machine vision guiding and that is associated with a camera.

As shown in FIG. 2Y, each data block may include a data block label 215 used for indicating a type of the data block and a data block body 216 used for presenting a display area of specific data. The data block label 215 may be a draggable label, for example, may be moved to any position in a canvas. The display area of the data block body 216 is adjustable in size, and is used to display different types of data from a data layer in real time. A monitor link 217 is established between each data block and a corresponding function block node, and one function block may be mapped to a plurality of data blocks. When a workflow is executed, for example, in a runtime, monitoring and output data corresponding to the function block node are transmitted to a corresponding data block for displaying in real time.

The data block in this embodiment is a low-code data block, and is different from other SCADA and dashboard systems in that, the low-code data block in this embodiment is also a low-code element, and may be used as a part of a behavior tree, and all attributes thereof may be managed in low-code logic. A data source in the low-code data block is from the data layer, and the data may be obtained through an interface provided by the data layer in a runtime or in a cloud execution engine. The data source may be a time series database, an RDBMS, or NoSQL. The low-code data block is a flexible, scalable, and adaptable system, and is applied to any function block node that may be associated with a physical device. In conclusion, a data block for implementing data monitoring may be considered as a data layer visualization interface.

Further, in another implementation, whether creation of the behavior tree is performed based on a function block node in a form of a label diagram or a function block node in a form of a type diagram, at least one data block may be further added and connected to each of at least one function block node in the behavior tree. Each data block is used for presenting corresponding data in a service operation of a function block node connected to the data block. A type of the data block may include some or all of a data pair, a data sheet, an image, a video, a chart, and the like.

FIG. 2Y is a diagram of separately adding a data block in four function block nodes in a behavior tree and displaying corresponding data in each data block according to an example of the present application. In this example, a behavior tree creation interface based on a function block type diagram is used as an example. As shown in FIG. 2Y, in this example, a data block of a type of live data-video is added in a function block node that is for recording a production video and that is associated with a monitor. A data block of a type of live data-text and a data block of a type of live data-chart are added in a function block node that is for screw fastening and that is associated with a torque wrench. A data block of a type of live data-image is added in a function block node that is for robot image collection and that is associated with a monitor. A data block of a type of live data-video is added in a function block node that is for machine vision guiding and that is associated with a camera.

As shown in FIG. 2Y, each data block may include a data block label 215 used for indicating a type of the data block and a data block body 216 used for presenting a display area of specific data. The data block label 215 may be a draggable label, for example, may be moved to any position in a canvas. The display area of the data block body 216 is adjustable in size, and is used to display different types of data from a data layer in real time. A monitor link 217 is established between each data block and a corresponding function block node, and one function block may be mapped to a plurality of data blocks. When a workflow is executed, for example, in a runtime, monitoring and output data corresponding to the function block node are transmitted to a corresponding data block for displaying in real time.

The data block in this embodiment is a low-code data block, and is different from other SCADA and dashboard systems in that, the low-code data block in this embodiment is also a low-code element, and may be used as a part of a behavior tree, and all attributes thereof may be managed in low-code logic. A data source in the low-code data block is from the data layer, and the data may be obtained through an interface provided by the data layer in a runtime or in a cloud execution engine. The data source may be a time series database, an RDBMS, or NoSQL. The low-code data block is a flexible, scalable, and adaptable system, and is applied to any function block node that may be associated with a physical device. In conclusion, a data block for implementing data monitoring may be considered as a data layer visualization interface.

In addition, in another implementation, the embodiment may be shown as a dashed part in FIG. 1, and further includes step S13.

Step S13: Analyze the behavior tree, and deploy the workflow corresponding to the behavior tree in a runtime of a corresponding workcell, to enable resources in the workcell to perform operations according to the workflow.

During specific implementation, the workcell may have a main controller. In this case, the runtime may be located in the main controller of the workcell. Correspondingly, a device resource in the resources may be connected to the main controller, and the main controller controls, according to the workflow of the runtime, the device resource connected to the main controller to perform a corresponding operation. Human resources and the like in the resources may directly perform corresponding operations according to a prompt of the workflow of the runtime.

In this embodiment, the behavior tree may be stored in a markup language, for example, an extensible markup language (XML), and may be verified by an XML Schema (XSD) prototype, to verify that an XML format of the behavior tree is correct. After the behavior tree is analyzed, a workflow represented in a form of a node link assembly may be obtained, and then the workflow is compiled and downloaded to a runtime of a main controller of a corresponding workcell.

In addition, according to a definition by Gartner, an OT domain generally refers to an operational technology (OT), which integrates hardware and software, and detects or triggers a process change or an occurrence of an event in an enterprise by directly monitoring and/or controlling a physical device (referred to as an OT device). The OT is to monitor or change a physical state of, for example, an industrial control system (ICS) by using a computer. The industrial control system is a computer-implemented facility, system, and device, and is configured to remotely monitor and/or control a key industrial process and implement a physical function. The term "OT" is used to distinguish between the industrial control system and a conventional information technology (IT) system in terms of technical implementation and function.

Currently, many IT low-code development tools or platforms exist in the market. Some tools are directed to an Internet of Things usage scenario, and are directed to an experienced IT engineer. However, it is difficult for an OT engineer and a primary IT engineer to understand paradigms thereof. However, some tools are more applicable to an IT domain low-code development usage scenario, but are not well applicable to the OT domain.

The foregoing workflow creation method in this embodiment may be used in the OT domain, and is used as a type of OT domain low-code development method. Specifically, the workflow creation method shown in FIG. 1A may be implemented in an OT domain, for example, on an OT domain low-code development platform. Correspondingly, the workflow may be an OT domain workflow; the workcell may be a workcell in the OT domain; and the device may be an OT device. Herein, the OT device may include but is not limited to: an Internet of Things (IoT) device, a programmable logic controller (PLC), robotics, a manual process, an industrial personal computer, and the like.

In addition, in this embodiment of the present application, it is considered that, currently, convergence of an IT domain and an OT domain becomes increasingly important in a digital transformation process of an enterprise. To converge the IT domain and the OT domain into an ITOT system, currently, a problem urgently to be resolved is how the enterprise collects data of the OT domain in a manner that is easy to understand rather than an IT domain programming manner and controls an OT domain process.

The foregoing workflow creation method in this embodiment may be applied to the ITOT system as a type of low-code development method of an OT domain that may be converged with the IT domain. Similarly, the workflow creation method shown in FIG. 1A may be implemented in an OT domain, for example, on an OT low-code development platform. Correspondingly, the workflow may be an OT domain workflow; and the workcell may be a workcell in the OT domain.

In addition, to implement the convergence of the IT domain and the OT domain, based on the workflow creation method shown in FIG. 1A, the following may be further included: generating a microservice based on the behavior tree, so that an IT device calls the microservice to trigger a runtime of the main controller of the workcell to execute the OT domain workflow. During specific implementation, the IT device may call the microservice directly or through a knowledge middle platform.

When a microservice is generated based on the behavior tree, an API of the microservice may be generated based on the behavior tree, where a processing process in the API includes operations in the OT domain workflow, an input parameter of the API is a parameter obtained through an input port of the OT domain workflow, and an output parameter of the API is a parameter outputted through an output port of the OT domain workflow.

To implement that the microservice can be called in the IT domain, that information of the microservice can be obtained in the IT domain is required. Specific implementations include but are not limited to the following two manners:

### Manner 1:

In Manner 1, an OT domain code developer may notify an IT domain code developer of a generated name and an IP address that are of each microservice. In this way, the IT domain code developer may directly write information of each microservice into code in a development process, to implement calling of the microservice by the IT device. Manner 1 is relatively suitable for a scenario with a relatively small quantity of microservices.

### Manner 2:

In Manner 2, a registration and discovery mechanism may be used. That is, each microservice is registered on the knowledge middle platform, so that an IT domain code development tool implements that the IT device discovers a connected microservice through the knowledge middle platform. During specific implementation, an IT domain code development tool may be used to implement, through code development, that the IT domain device discovers a connected microservice through the knowledge middle platform. An apparatus that completes registration of the microservice may be an OT domain microservice generator or a third-party apparatus. The third-party apparatus may be considered as a part of the OT domain low-code development platform, or implemented in the knowledge middle platform. Manner 2 is relatively suitable for a scenario with a relatively large quantity of microservices.

In this embodiment, the IT device may include but is not limited to: a manufacturing operation management (MOM) system, a manufacturing execution system MES), an enterprise resource planning (ERP) system, an enterprise service bus (ESB), and a product lifecycle management (Product Lifecycle Management, PLM) system.

In this embodiment, the IT domain code development tool may be used to implement, through programming, that the IT device calls a microservice through the knowledge middle platform to trigger a runtime of the main controller of the workcell to execute the OT domain workflow, so as to implement that the IT domain code development platform controls an OT domain process, that is, implement convergence of the IT domain and the OT domain. Herein, the microservice is automatically generated by an OT domain microservice generator based on an OT domain behavior tree, the IT domain code development tool does not need to understand details of the OT domain workflow, but only needs to obtain an identifier of the microservice (for example, a name) and an IP address, and the IT domain developer does not need to understand an OT domain device and a control process. This is easy to implement and understand.

Fields to which embodiments of the present application may be applied include but are not limited to: industrial automation, logistics, laboratory, maritime, a smart grid, an electric vehicle infrastructure, an electric vehicle, building automation, a smart city, water treatment, garbage recycling, and a smart farm.

The workflow creation method in embodiments of the present application is described in detail above. A workflow creation system in embodiments of the present application is described in detail below. The workflow creation system in embodiments of the present application may be configured to implement the workflow creation method in embodiments of the present application. For details that are not disclosed in detail in the system embodiments of the present invention, refer to corresponding descriptions in the method embodiments of the present invention. Details are not described herein.

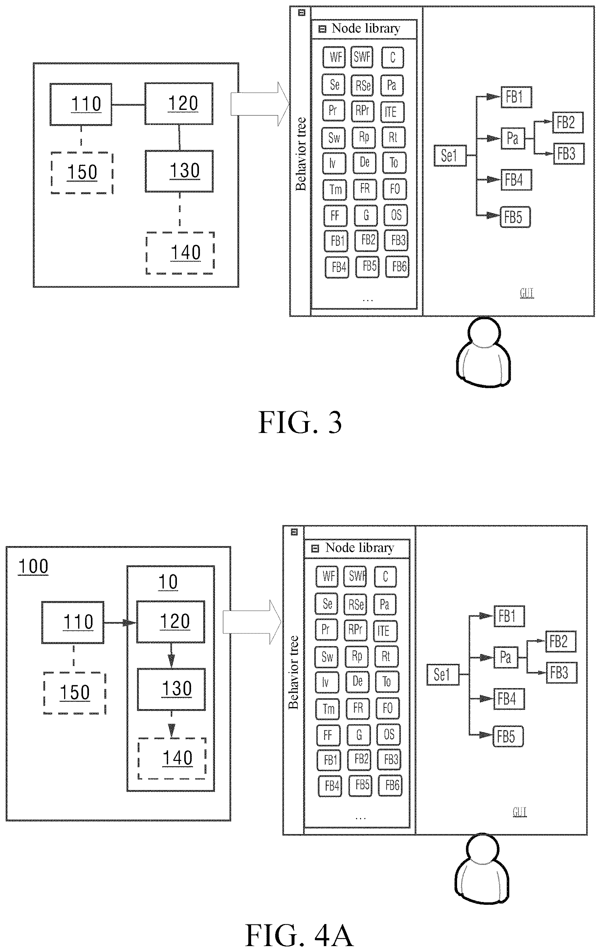

FIG. 3 is a diagram of a structure of a workflow creation system according to an embodiment of the present application. As shown in FIG. 3, the system may include: a node library 110, a graphical interface module 120, and an editing and processing module 130.

The node library 110 is provided with a behavior tree node configured to construct a behavior tree. The behavior tree node may include: a flow control node and a function block node. One behavior tree is used for representing one workflow, and the workflow is used for defining an operation to be performed by one workcell. The flow control node is configured to implement logic control in the workflow. The function block node is configured to implement a service operation in the workflow. The function block node may include: a logical node, where each logical node corresponds to one operation template, and each operation template predefines an operation that at least one type of resource such as a device can perform, the operation including: an action, a method, or a skill.

In an implementation, the resource is represented in a form of a resource node, and all resource nodes are associatively stored in a form of a resource knowledge graph. The resource knowledge graph includes: the resource nodes, and a connection line representing a relationship between the resource nodes. Correspondingly, in this embodiment, the system may further include: a resource library 150, configured to store resources in the form of the resource knowledge graph, where each resource can perform at least one service operation.

In an implementation, the flow control node may include: some or all of a main control node, a logical control node, and a condition node. The main control node may include: some or all of a start node, an end node, a goto node, an anchor node, a stop node, and an abort node. The logical control node includes: some or all of a sequence node, a reactive sequence node, a parallel node, an in-process quality control node, a priority node, a reactive priority node, an if-then-else node, and a multi-branch selection node.

In an implementation, the function block node may further include: some or all of a manual node, a dynamic node, a delay node, and an idle node.

In an implementation, the behavior tree node further includes: a decorator node, which may include: some or all of a repeat node, a retry node, a one-shot node, a timeout node, a timer node, an inverter node, a force run node, a force OK node, a force failed node, and a guard node.

In an implementation, some or all of function block nodes in the node library 110 respectively have resources bound thereto, where the resources are used for performing service operations corresponding to the function block nodes.

The graphical interface module 120 is configured to provide, for a user, a graphical user interface (GUI) for constructing a behavior tree based on behavior tree nodes in the node library.

The behavior tree nodes may be listed in forms of icons on the graphical user interface (GUI).

The editing and processing module 130 is configured to generate, in response to the behavior tree construction operation, a behavior tree corresponding to a workflow, where a logical node in the behavior tree is instantiated as an operation of a corresponding resource such as a device. During specific implementation, the editing and processing module 130 may instantiate the behavior tree nodes in response to the behavior tree construction operation, and establish a connection relationship between the instantiated behavior tree nodes; and generate a behavior tree corresponding to a workflow based on the connection relationship between the instantiated behavior tree nodes. Some or all of the instantiated function block nodes are associated with resources for performing corresponding service operations. For example, the logical node is instantiated as an operation of a corresponding resource such as a device through the operation.

In this embodiment, the behavior tree nodes may be listed in forms of icons on the graphical user interface. A user may determine, by selecting and dragging the icon to a canvas, a node required to create a workflow. Further, necessary parameter configuration, such as resource configuration and/or input/output parameter configuration, may be further performed on the node. If there is more than one operation to be performed by a workcell, to be specific, there is more than one operation defined in a required workflow, a behavior tree corresponding to the workflow may include a plurality of logical nodes. According to an order of and an interrelationship between the operations, a corresponding flow control node may be set, and a behavior tree corresponding to the workflow is finally generated by making a corresponding discharge connection to a dragged node.

In an implementation, the construction operation may include: an operation of adding a function block node and an operation of associating the added function block node with a resource. Corresponding to the method shown in FIG. 1A, the workflow creation system in this embodiment may further include: an analysis and deployment module 140, configured to analyze the behavior tree, and deploy the workflow corresponding to the behavior tree in a runtime of a main controller of a corresponding workcell, to enable resources connected to the main controller in the workcell to perform operations according to the workflow.

FIG. 4A shows an OT domain low-code development platform 100 according to an embodiment of the present application. The platform 100 may be configured to implement the workflow creation system shown in FIG. 3. As described above, currently, there is no low-code development tool and platform suitable for an OT domain. In the platform 100 shown in FIG. 4A, an operation template using which various types of OT devices can perform an operation is pre-defined (which may be considered as providing a capability of the OT domain), a corresponding logical node is constructed based on the operation template, and another behavior tree node for building an OT domain workflow is provided. Therefore, a behavior tree corresponding to the OT domain workflow may be conveniently and quickly created, so that low-code development suitable for the OT domain is implemented. A development engineer can implement OT domain development without having a deep understanding of the various types of OT devices.

Specifically, as shown in FIG. 4A, the OT domain low-code development platform 100 may include:
an OT domain low-code development tool 10. The OT domain low-code development tool 10 may be configured to implement the graphical interface module 120 and the editing and processing module 130 in the workflow creation system shown in FIG. 3, and further, may implement the analysis and deployment module 140 in the workflow creation system shown in FIG. 3. The node library 110 in the workflow creation system shown in FIG. 3 may be stored in a memory.

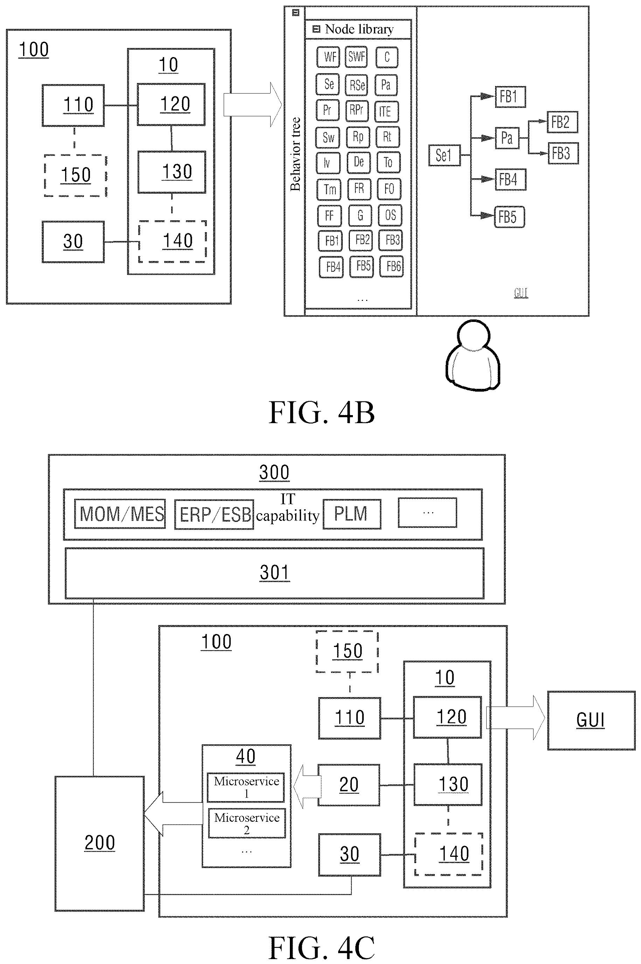

Further, as shown in FIG. 4B, an OT domain low-code development platform 100 may further include a runtime 30 of the main controller of the foregoing workcell. The OT domain low-code development tool 10 may deploy an OT domain workflow corresponding to a generated behavior tree to the runtime 30 of the main controller of the workcell, so that OT devices connected to the main controller in the workcell perform operations according to the OT domain workflow. The runtime 30 in this embodiment is an interpreter-driven runtime system, configured to execute the workflow and manage a necessary related process. The system is based on an interpreter with a good open-source community, for example, may be based on a Python and Google V8 interpreter. Therefore, an ecosystem is easy to establish and can be easily expanded to use another interpreter. For a behavior tree to which a data block is connected, the runtime may further provide corresponding data obtained in a process of performing a service operation to the corresponding data block for display. During specific implementation, the runtime 30 may directly provide the corresponding data obtained in the process of performing a service operation to the corresponding data block for display or provide the corresponding data to the corresponding data block through a third-party device for display. In this embodiment, the runtime may access a field bus and device by using a standard field bus and device protocol in advance. During specific implementation, the workcell may have a main controller. In this case, the runtime 30 may be located on the main controller of the workcell. A device resource in the resources may be connected to the main controller, and the main controller controls, according to a workflow of the runtime, the device resource connected to the main controller to perform a corresponding operation. Human resources and the like in the resources may directly perform corresponding operations according to a prompt of the workflow of the runtime.

Composition of the OT domain low-code development platform 100 shown in FIG. 4A and FIG. 4B only relates to the OT domain. However, convergence of the IT domain and the OT domain is increasingly important for digital transformation of an enterprise. What needs to be implemented is how the enterprise controls a process of the OT domain in a manner that is easy to be understood and that is a non-IT programming manner. An OT domain low-code development platform 100 shown in FIG. 4C implements a process of how to control an OT domain through an IT domain code development platform 300. As shown in FIG. 4C, based on the structure shown in FIG. 4B, the OT domain low-code development platform 100 may further include an OT domain microservice generator 20, which may generate a microservice 40 based on an OT domain behavior tree. In this way, the IT domain code development tool 301 may implement, through programming, that an IT device calls the microservice 40 through a knowledge middle platform 200 to trigger a runtime 30 of a main controller of a workcell to execute an OT domain workflow. In this way, control of an OT domain process by the IT domain code development platform 300 is implemented, that is, convergence of the IT domain and the OT domain is implemented. Herein, the microservice 40 is automatically generated by the OT domain microservice generator 20 based on the OT domain behavior tree, the IT domain code development tool 301 does not need to understand details of the OT domain workflow, but only needs to obtain an identifier of the microservice 40 (for example, a name) and an IP address, and an IT domain developer does not need to learn of an OT domain device and a control process. This is easy to implement and understand.

To implement that the microservice 40 can be called in the IT domain, that information of the microservice 40 can be obtained in the IT domain is required. Corresponding to the method shown in FIG. 1A, implementable manners thereof include but are not limited to the following two manners:

### Manner 1:

In Manner 1, an OT domain code developer may notify an IT domain code developer of a generated name and an IP address that are of each microservice 40. In this way, the IT domain code developer may directly write information of each microservice 40 into code in a development process, to implement calling of the microservice 40 by the IT device. Manner 1 is relatively suitable for a scenario with a relatively small quantity of microservices.

### Manner 2:

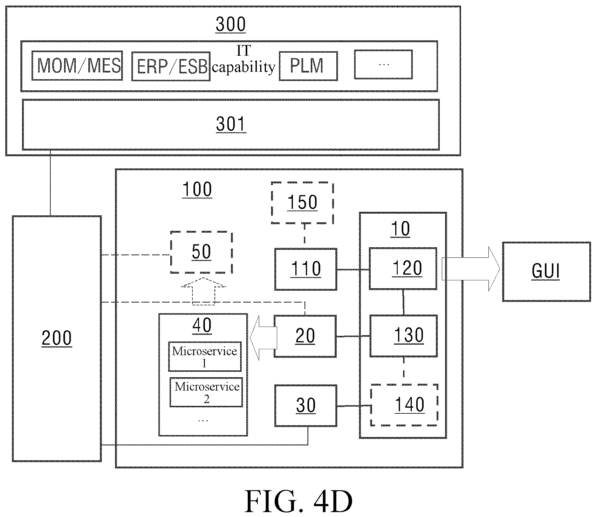

In Manner 2, a registration and discovery mechanism may be used. Each microservice 40 may be registered on the knowledge middle platform 200. In this way, the IT domain code development tool 301 may implement, through code development, that the IT domain device discovers a connected microservice 40 through the knowledge middle platform 200. In addition, an apparatus that completes registration of the microservice 40 may be the OT domain microservice generator 20 or a third-party apparatus 50 as shown in FIG. 4D. The third-party apparatus 50 may be considered as a part of the OT domain low-code development platform 100, or may be implemented in the knowledge middle platform 200. Manner 2 is relatively suitable for a scenario with a relatively large quantity of microservices. The microservice is registered on the knowledge middle platform, so that calling of the microservice by the IT device is implemented more effectively, and convergence of the OT domain and the IT domain is enhanced.

Optionally, the OT domain microservice generator 20 may generate an API of the microservice 40 based on the OT domain behavior tree, where a processing process in the API may include operations of function blocks in an OT domain workflow, an input parameter of the API is a parameter obtained by an input port of the OT domain workflow, and an output parameter of the API is a parameter outputted by an output port of the OT domain workflow.

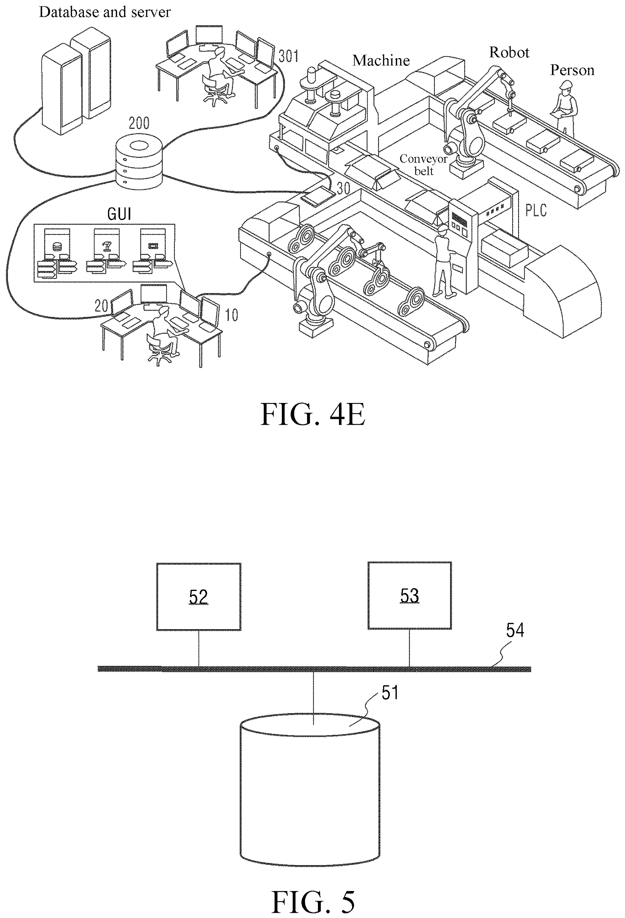

FIG. 4E shows an application scenario of an OT domain low-code development platform 100 in an industrial automation field according to an embodiment of the present application. The low-code development tool 10 generates a behavior tree corresponding to an OT domain workflow under an operation of a user. The OT domain workflow defines an operation to be performed by a production line that serves as a workcell shown on a right side of FIG. 4E. The corresponding workflow is generated based on the behavior tree and published to the runtime 30, so that the runtime 30 performs control to complete the operation of the production line of the workcell. In addition, a corresponding microservice may be generated by the microservice generator 20 based on the behavior tree and registered on the knowledge middle platform 200. In this way, the IT domain code development tool 301 can call the corresponding microservice through the knowledge middle platform 200. As shown in a GUI at a lower left corner of FIG. 4E, the user may edit the OT domain behavior tree by editing, through dragging, various nodes including a function block node, for example, first, obtain required data (for example, a workpiece processing parameter) from a database & a server through the knowledge middle platform 200, to control operation of the entire workcell. The workcell herein is a production line, and the production line includes a machine, a conveyor belt, a robotic arm, a person, a PLC, an AGB, and the like. During specific implementation, the IT domain code development tool 301 may alternatively be located on a same hardware device as the low-code development tool 10, for example, on a same computer.

FIG. 5 is a diagram of a structure of another workflow creation system according to an embodiment of the present application. As shown in FIG. 5, the system may be configured to implement the method shown in FIG. 1A, implement the workflow creation system shown in FIG. 3, or implement the workflow creation system, namely, the OT domain low-code development platform 100, described in any one of FIG. 4A to FIG. 4D. The OT domain low-code development tool 10, the OT domain microservice generator 20, the runtime 30, and the third-party apparatus 60 described above may each be implemented as a separate hardware device, for example, a server, a workstation, a single chip microcomputer, or a processing chip. Alternatively, these apparatuses are implemented on a same hardware device, and are stored as software programs in at least one memory, and invoked by at least one processor to implement the foregoing OT domain low-code development method. The node library 110 and each generated microservice 40 may be stored in at least one memory.

As shown in FIG. 5, the system may include: at least one memory 51, at least one processor 52, and at least one display 53. In addition, some other components, for example, a communication port (not shown in FIG. 5), may be further included. These components perform communication through a bus 54.

The at least one memory 51 is configured to store a computer program. The at least one memory 51 may include a computer-readable medium, for example, a random access memory (RAM). In addition, the at least one memory 51 may further store an operating system and the like. The operating system includes but is not limited to: an Android operating system, a Symbian operating system, a Windows operating system, and a Linux operating system. The computer storage program may include the following program modules: a node library 110, a graphical interface module 120, an editing and processing module 130, an analysis and deployment module 140, and optionally, may further include an OT domain microservice generator 20, a runtime 30, and a third-party apparatus 50.

The at least one processor 52 is configured to invoke the computer program stored in the at least one memory 51, to perform the workflow creation method according to embodiments of the present application. The at least one processor 52 may be a microprocessor or an application-specific integrated circuit (ASIC), a digital signal processor (DSP), a central processing unit (CPU), a graphics processing unit (GPU), a state machine, or the like. The processor can receive and transmit data through the communication port.

The at least one display 53 is configured to display a graphical user interface.

Specifically, the at least one processor 52 is configured to invoke the computer program stored in the at least one memory 51, to enable the system to perform the operations of the workflow creation method in any one of the foregoing implementations. In addition, the communication interface is configured to implement communication with another device, for example, communication with the knowledge middle platform 200.

In this embodiment of the present application, the OT domain low-code development tool 10 configured to implement the graphical interface module 120, the editing and processing module 130, and the analysis and deployment module 140 may be a lightweight web-based application program, and may be implemented on an industrial site (for example, an edge device or a local server), or may be implemented on a cloud (for example, a public cloud such as AWS or a private cloud such as OpenStack). An engineering paradigm for visualization thereof originates from a function block type diagram (FBTD). The OT domain microservice generator 20 may use a modern translated programming language to generate a standard API such as RESTful or RPC. The runtime 30 may simply implement an OT domain workflow, and provides openness based on an ecosystem of an open-source community (for example, Python). The runtime 30 may be deployed on, for example, an embedded loT device of a single-board computer (SBC).

It should be mentioned that embodiments of the present application may include an apparatus having an architecture different from that shown in FIG. 5. The foregoing architecture is merely an example, and is used for explaining the workflow creation method provided in embodiments of the present application.

In addition, an embodiment of the present application further provides an IT domain and OT domain convergence system, that is, an ITOT system, which may include an IT device and the workflow creation system according to any one of the implementations of the present application. In addition, the system may further include: the IT domain code development platform 300 as shown in FIG. 4C and FIG. 4D.

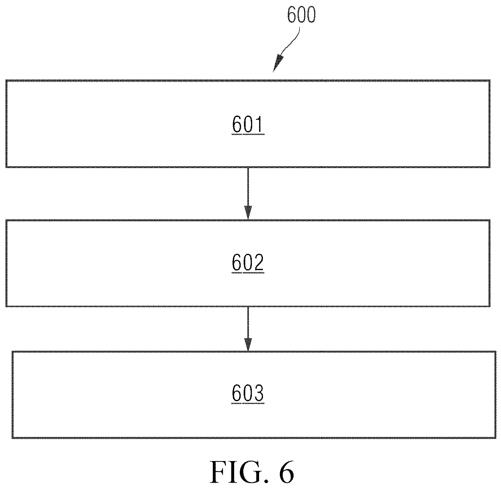

An embodiment of the present invention further provides a technical solution in which a compositor node uses a low-code paradigm having function block type diagram (FBTD) logic to control a workflow. FIG. 6 is an example flowchart of a workflow control method according to embodiments of the present application. As shown in FIG. 6, a method 600 includes the following steps.

Step 601: Determine a type of a compositor node based on an operation of a user on a graphical user interface, where the compositor node includes a start block adapted to start execution of the compositor node, an end block adapted to end execution of the compositor node, and a plurality of working links arranged between the start block and the end block.

Step 602: Determine a destination working link from the plurality of working links based on the type of the compositor node.

Step 603: Control logic of a workflow based on the destination working link, where the workflow is generated based on a behavior tree including the compositor node.

The compositor node always appears in a pair with the start block and the end block. The start block has an optional input port to provide a compositor expression, so that a target working link can be selected according to the compositor expression. For example, the target working link is selected according to a value of the compositor expression, or the target working link is selected based on a working link selection rule limited by the compositor expression. The end block has an optional input port referred to as an end logic value. A parallel-type compositor node uses the end logic value to determine whether the end logic value is logical AND or logical OR. A set of compositor pair blocks may include two or more working links (in other words, branches). Optionally, a data value block (DVB) is attached before each working link in the compositor pair block, and represents a trigger value of a compositor expression of a corresponding working link. In an implementation, the data value block may be a value that is generated by the corresponding working link based on the compositor expression and that is used for selecting the corresponding working link. In another implementation, the data value block may alternatively be a condition for selecting the corresponding working link, where the condition is related to a value generated based on the compositor expression.

In an implementation, at least one of the plurality of working links includes a function block node, and the function block node is configured to implement a service operation in the workflow. In an implementation, the determining a type of a compositor node based on an operation of a user on a graphical user interface includes: determining the type of the compositor node based on a selection operation of the user on the graphical user interface including a node library, where the node library includes: a compositor node for which a type is identified in a semantic manner or a compositor node for which a type is identified in a presentation style.

In the compositor node for which the type is identified in a semantic manner, the type of the compositor node is directly identified in a text manner on an icon that has a visual effect and that is of the compositor node.

In the compositor node for which the type is identified in a presentation style, the type of the compositor node is correspondingly identified by using different presentation styles. For example, on an icon of the compositor node, the type of the compositor node is correspondingly identified by using different linear types (for example, a solid line, a dashed line, and a spacing line) that form the icon.

In an implementation, the method further includes: receiving an operation of constructing a behavior tree performed by a user in a graphical user interface, where the construction operation includes a behavior tree node addition and connection operation, and the behavior tree node includes the compositor node and the function block node; the behavior tree is used for representing the workflow, and the workflow is used for defining an operation to be performed by a workcell; and the function block node includes: a logical node, where each logical node corresponds to one operation template, and each operation template predefines an operation that at least one type of device can perform, the operation including: an action, a method, or a skill; generating, in response to the operation of constructing the behavior tree, the behavior tree corresponding to the workflow, where a logical node in the behavior tree is instantiated as an operation of a corresponding device; analyzing the behavior tree to obtain the workflow; and deploying the workflow in runtime of a corresponding workcell, to enable devices in the workcell to perform operations according to the workflow, where the workflow is an OT domain workflow; and the device is an OT device.

In an implementation, the method further includes: generating a microservice based on the behavior tree, so that an IT device calls the microservice to trigger a runtime of a main controller of the workcell to execute the OT domain workflow.

The following describes an example of flexible control of a workflow by using different types of compositor nodes.

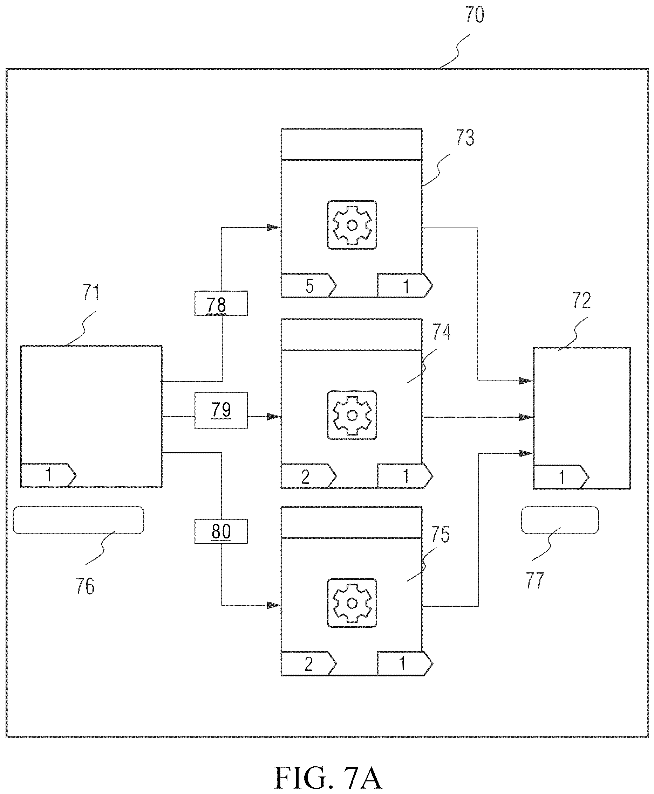

FIG. 7A is a first diagram of a low-code example of an FBTD logic compositor according to embodiments of the present application. In FIG. 7A, a compositor node 70 includes a start block 71, an end block 72, and three working links arranged between the start block 71 and the end block 72. The first working link includes executing a function block node 73, the second working link includes executing a function block node 74, and the third working link includes executing a function block node 75. The start block 71 may include an input end configured to provide a composite expression 76. The end block 72 may include an input end configured to provide an end logic value 77. Each of the function block node 73, the function block node 74, and the function block node 75 has a respective data value block. A data value block 78 of the function block node 73, a data value block 79 of the function block node 74, and a data value block 80 of the function block node 75 may be arranged before respective corresponding function block nodes.

Depending on different types of the compositor node 70, different manners of determining a destination working link from a plurality of working links may be implemented, so that flexible control of the workflow is implemented.

In an implementation, the type of the compositor node 70 is parallel selection (Pa). The determining a destination working link from a plurality of working links includes: determining each of the plurality of working links as a destination working link, and starting to execute the destination working link. The method further includes: receiving the end logic value through the input end of the end block; and ending, when the end logic value is logical AND, execution of the compositor node through the end block when the plurality of working links are all executed; or ending, when the end logic value is logical OR, execution of the compositor node through the end block when execution of at least one of the plurality of working links is completed.

Specifically, in FIG. 7A, when the type of the compositor node 70 is parallel selection, there is no need to provide the composite expression 76 for the compositor node 70. Correspondingly, there is no need to generate composite data value blocks 78 to 80, but there is a need to provide the end logic value 77 for the compositor node 70. In this case, a 1^{st} working link, a 2^{nd} working link, and a 3^{rd} working link are all determined as destination working links. In addition, the 1^{st} working link, the 2^{nd} working link, and the 3^{rd} working link are separately executed (that is, the function block node 73, the function block node 74, and the function block node 75 are synchronously executed). It is determined, based on a value of the end logic value 77, when to stop executing the compositor node 70. When the value of the provided end logic value 77 is logical AND, execution of the compositor node 70 is ended through the end block 72 when execution of all of the 1^{st} working link, the 2^{nd} working link, and the 3^{rd} working link is completed. When the value of the end logic value 77 is logical OR, execution of the compositor node 70 is ended through the end block 72 when execution of at least one of the 1^{st} working link, the 2^{nd} working link, and the 3^{rd} working link is completed.

In an implementation, the type of the compositor node is multi-branch selection (SW, Switch), and the method further includes: receiving a preset synthetic expression through the input end of the start block; and the determining a destination working link from a plurality of working links includes: determining a data value block when each working link is selected; and selecting, based on a calculation result of the composite expression, a destination working link that meets a corresponding data value block from the plurality of working links.

Specifically, in FIG. 7A, when the type of the compositor node 70 is multi-branch selection, the composite expression 76 needs to be provided. Correspondingly, composite data value blocks 78 to 80 need to be generated based on the composite expression 76 or manually provided, but there is no need to provide the end logic value 77. For example, it is assumed that a data value block is a condition for selecting a corresponding working link, where the data value block 78 is: "the temperature is greater than 30 degrees and less than 50 degrees"; the data value block 79 is: "the temperature is greater than 50 degrees"; and the data value block 80 is: "the temperature is less than 30 degrees". In this case, based on a specific temperature generated by the composite expression, a specific branch corresponding to the value block may be selected. For example, the 3^{rd} working link corresponding to the data value block 80 is selected when the generated temperature is 20 degrees.

In an implementation, the type of the compositor node is if-then-else (ITE), and the method further includes: receiving a preset composite expression through the input end of the start block, where a result of the composite expression includes a logical true value or a logical false value; and the determining a destination working link from a plurality of working links includes: determining a corresponding destination working link from the plurality of working links based on the result of the composite expression being the logical true value or the logical false value.

Herein, a preset working link corresponding to the logical value is selected depending on whether a logical value generated by the composite expression is true or false.

Specifically, in FIG. 7A, when the type of the compositor node 70 is if-then-else, the composite expression 76 that can generate a logical value being true or False needs to be provided. It is assumed that the 1^{st} working link corresponds to true, and the 2^{nd} working link corresponds to false. In this case, when the value of the composite expression 76 is true, the 1^{st} working link used as the destination working link is selected and executed. When the value of the composite expression 76 is false, the 2^{nd} working link used as the destination working link is selected and executed. In an implementation, the type of the compositor node is priority (Fallback), and the method further includes: receiving a preset composite expression through the input end of the start block; and the determining a destination working link from a plurality of working links includes: calculating data value blocks of the working links based on the composite expression; determining a priority order of the plurality of working links based on a sorting result of the data value blocks of the working links; and determining the destination working link from the plurality of working links based on the priority order. The data value block may be a value that is generated for the corresponding working link based on the compositor expression and that is used for selecting the corresponding working link. To be specific, the data value block 78, the data value block 79, and the data value block 80 that are generated based on the compositor expression may be different (for example, parameters of executed links are different). In this case, the priority order of the plurality of working links is determined based on the sorting result of the data value blocks of the working links. The destination working link is determined from the plurality of working links based on the priority order, where based on predetermining, the sorting result of the data value blocks may be sorting from large to small, or sorting from small to large, or the like. For example, in FIG. 7A, the composite expression 76 needs to be provided when the type of the compositor node 70 is priority. It is assumed that a data value block generated for the 1^{st} working link based on the composite expression 76 is 15. It is assumed that a data value block 78 generated for the 1^{st} working link based on the composite expression 76 is 18, a data value block 79 generated for the 2^{nd} working link based on the composite expression 76 is 20, and a data value block 80 generated for the 3^{rd} link based on the composite expression 76 is 25. The priority order of the working links is determined according to a size order of the data value blocks. It can be learned that the 3^{rd} working link has a largest priority (because the data value block 80 of the 3^{rd} working link is the largest among the data value blocks), so that the 3^{rd} link is determined as the destination working link, and the 3^{rd} link used as the destination working link is executed.

In an implementation, the type of the compositor node is reactive priority (RPr (Fallback)), and the method further includes: receiving a first composite expression and a second composite expression through the input end of the start block; and the determining a destination working link from a plurality of working links includes: calculating first data value blocks of working links based on the first composite expression; calculating second data value blocks of working links based on the second composite expression; determining a priority order of the plurality of working links based on a sorting result of the first data value blocks of the plurality of working links; and determining the destination working link from the plurality of working links based on the priority order and the second data value blocks of the working links.

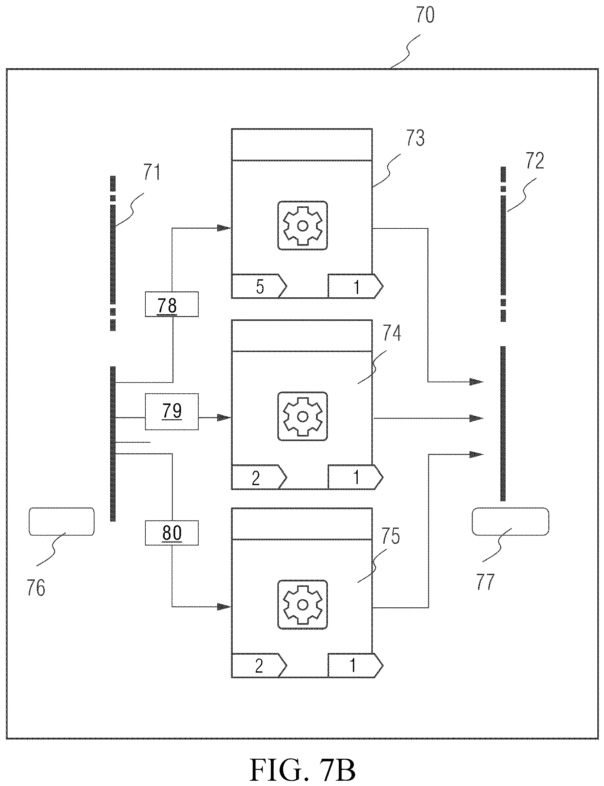

In FIG. 7A, on an icon that has a visual effect and that is of the compositor node, the type of the compositor node may be directly identified in a text manner (for example, the type is identified in a text manner in boxes of the start block 71 and the end block 72). FIG. 7B is a second diagram of a low-code example of an FBTD logic compositor according to embodiments of the present application. In FIG. 7B, a start block 71 and an end block 72 are briefly identified by using a spacing line that has a specific shape, so that a type of a compositor node can be visually identified, and a display resource of a canvas can be saved.

The foregoing compositor node is easy to understand, but is only applicable to a limited quantity of branches. Therefore, an embodiment of the present invention further introduces a new compositor node paradigm that can support a large quantity of branches. A folding compositor has a function similar to that of an ordinary compositor, but supports folding.

In an implementation, the compositor node is displayed in a folding manner in a folding frame on a graphical user interface, where the folding frame includes a first display area, and the first display area is adapted to display a current display working link of the compositor node and hide working links other than the current display working link. In an implementation, the folding frame further includes a second display area, a third display area, and a switching control, where the second display area is adapted to display a data value block of the current display working link; the third display area is adapted to display a label of the current display working link; and the switching control is adapted to switch the current display working link among a plurality of working links.

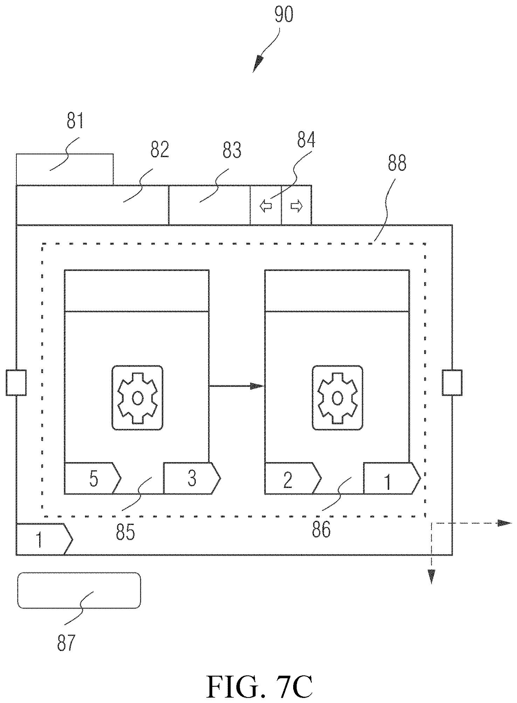

FIG. 7C is a diagram of a low-code paradigm of a compositor that has FBTD logic and that has a folded form according to embodiments of the present application. In FIG. 7C, a folding frame 90 includes a first display area 88, a second display area 83, and a third display area 81. A current display working link is displayed in the first display area 88. The current display working link includes a function block node 85 and a function block node 86. A data value block of the current display working link is displayed in the second display area 83. A label of the current display working link is displayed in the third display area 81. The folding frame 90 further includes a switching control 84 (for example, a shape of an arrow) for switching the current display working link among the plurality of working links. The first display area 88 is preferably stretchable, and may be stretched based on a length of the current display working link included in the first display area. It can be learned that the folding compositor is a low-code paradigm of another type of FBTD compositor. A data value block of a compositor expression result may be in a new column of a header row. In addition, there are left and right arrow buttons that may switch between different branches. A data value block of a current branch is to be displayed in a data value block column. In addition, a current label of a current branch of the compositor is displayed in a work instruction label index block. A size of the folding compositor may stretch for different quantities of function blocks. This paradigm provides a convenient way to display complex logic in a limited area of a low-code canvas.

An embodiment of the present invention further provides a workflow execution method. A workflow in a markup language format is analyzed to obtain a workflow represented in a form of a node link assembly (Node Link Assembly, NLA). Then, the workflow represented in the form of the node link assembly is compiled and downloaded to a runtime of a main controller of a corresponding workcell, and the workflow is executed. The node link assembly is implemented as a general-purpose, runtime execution engine logic assembly language, and is preferably used for executing an event-based low-code workflow.

Basic elements of the node link assembly may include:

### (1) Node link structure

The node link structure is a basic type of a loop directed graph data structure. Most event-based low-code is based on the node link structure, for example, the IEC 61499 standard. An implementation of the present invention preferably uses an event-based behavior tree. Therefore, interpreting the behavior tree into the node link structure is conducive to execution. The node link structure may be considered as a low-code assembly language.

### (2) Conditional goto node

Conditional goto node is a single node added by an interpreter of the node link assembly, and is configured to convert an event-based behavior tree into a workflow represented in a form of the node link assembly. A function of the conditional goto node is: Goto any place specified by a link when a condition (usually, an expression) is met. In the assembly language, the node is a node required for flow control, and is introduced as an execution element to support low-code interpretation.

### (3) Reverse logical flow and backward vector

The reverse logical flow is basic general-purpose logic, and may support all reverse logic of a behavior tree or another programming language. Loop (Repeat), Retry, or the like in low-code of the behavior tree is a reverse logical flow, which may be converted into a conditional goto node in which reverse event goto is added. A skipped function block is a part of the reverse vector. The reverse logical flow and the backward vector provide a meta method to describe logic as the node link assembly.

### (4) Forward logical flow and forward vector

The forward logical flow is basic general-purpose logic, and may support all forward logic of a behavior tree or another programming language. Condition/timeout in low-code of the behavior tree is a forward logical flow, which may be converted to a conditional goto node in which forward event goto is added. A skipped function block is a part of the forward vector. The forward logical flow and the forward vector provide a meta method to describe logic as the node link assembly.

### (5) Nested and goto logic

The backward vector and the forward vector have logical completeness, and may represent all logic, such as compound logic (for example, If-Then-Else and Swtich-Case-Default) and other behavior tree logic (for example, Fallback or Guard). Logic of the node link assembly may be a part of a low-code workflow. The workflow further includes a sequence node, a parallel node, and a flow control node (for example, start, end, and goto).

### (6) Empty node

The empty node is an empty function block that has no actual function. The node is automatically generated by an interpreter of the node link assembly, and is configured to internalize goto logic with a goto target.

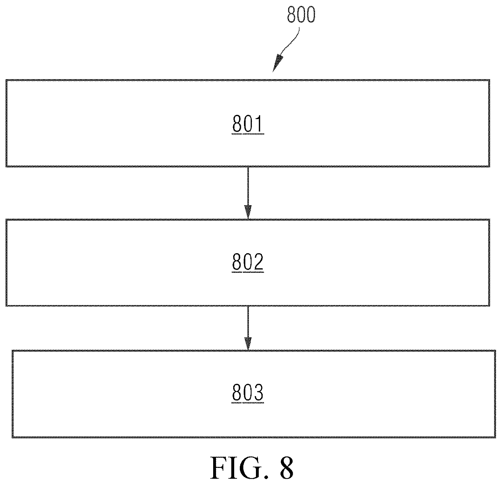

FIG. 8 is an example flowchart of a workflow execution method according to an embodiment of the present application. As shown in FIG. 8, a method 800 includes the following steps.

Step 801: Obtain a workflow and configuration information, where the workflow is generated based on a behavior tree construction operation performed by a user on a graphical user interface.

Herein, the workflow may be implemented as follows: a workflow that is represented in a form of a workflow topology and that is obtained by converting a workflow in a markup language format in a node link assembly manner. In addition, the workflow in the markup language format may be obtained by using an analysis operation, using FIG. 2B to FIG. 2S as an instance, on a behavior tree constructed by presenting a function block node in a form of a label diagram, or may be obtained by using an analysis operation, using FIG. 2T to FIG. 2Y or FIG. 7A to FIG. 7C as an instance, on a behavior tree constructed by presenting a function block node in a form of a type diagram.

Step 802: Configure, based on the configuration information, a auxiliary process adapted to provide a resource for the workflow, where the auxiliary process is adapted to host a long connection to the resource.

There may be one or more auxiliary processes. The auxiliary process is used for providing the resource for the workflow. The configuration information may be used for configuring the auxiliary process that provides the resource for the workflow. For example, the configuration information may include resource attribute information (for example, a hardware parameter of the resource, execution time of the resource, and the like). The configuration information may be obtained based on a resource knowledge graph, or the configuration information may be obtained based on an interactive operation with the user on the graphical user interface. Preferably, the configuration information may be further used for generating a real-time operation process used for providing a real-time operation capability.

Step 803: Generate a function block process adapted to execute a function block in the workflow, where the function block process is adapted to host a first idempotent short connection (Idempotent Short Connection) to the auxiliary process and/or a second idempotent short connection with the resource, and the auxiliary process is decoupled from the function block process. A characteristic of the idempotent short connection is that impact caused by any plurality of executions thereof is the same as impact caused by one execution thereof. In software engineering, coupling refers to dependency between objects. A higher coupling degree between objects leads to higher maintenance costs. Therefore, object design has to minimize coupling between classes and between components. Herein, a meaning that the auxiliary process is decoupled from the function block process includes: The auxiliary process and the function block process are independent of each other and are not dependent on each other.

The method 800 may be performed by a runtime that is of a workcell and in which a workflow is deployed. During specific implementation, the workcell may have a main controller. In this case, the runtime may be located in the main controller of the workcell. Preferably, the workflow may be an OT domain workflow. The workcell may be a workcell in an OT domain. The runtime is an execution engine and orchestration of the workflow. The runtime may not be a single piece of software, but is a system including all necessary runtime software subsystems. The runtime may be deployed into a target PC or a session boundary controller (SBC). The runtime may be an interpreter-driven runtime system, configured to execute the workflow and manage a necessary related process. The system is based on an interpreter with a good open-source community, for example, may be based on a Python and Google V8 interpreter. Therefore, an ecosystem is easy to establish and can be easily expanded to use another interpreter. The runtime may access a field bus and device by using a standard field bus and device protocol in advance. During specific implementation, the workcell may have a main controller. In this case, the runtime may be located in the main controller of the workcell. A device resource in the resources may be connected to the main controller, and the main controller controls, according to a workflow of the runtime, the device resource connected to the main controller to perform a corresponding operation. Human resources and the like in the resources may directly perform corresponding operations according to a prompt of the workflow of the runtime.

Therefore, an embodiment of the present invention provides a runtime mode, used for decoupling an event-based non-real-time workflow from real-time control logic that has a long connection. It can be learned that, in this implementation of the present invention, by decoupling the auxiliary process from the function block process, real-time control logic can be implemented based on a speed-limited workflow.

In this embodiment of the present invention, a runtime architecture that implements a control logic isolation principle may include:

### (1) Function block process and idempotent short connection

In a runtime, execution of each function block in a workflow is in a separate process, and is used for isolating different programming language implementations. Therefore, each function block process carries only an idempotent short connection. The short connection represents that the function block process does not maintain a long connection with any physical node (a hardware device). On the contrary, if the function block process performs an operation of a target device, the function block process starts and ends an internal connection of the function block process (where the process terminates when the function block process completes execution). Idempotent means that no state is saved for a short connection of each function block process, and there is a same execution environment each time.

### (2) Decoupled unmanaged process (that is, an auxiliary process)

The auxiliary process serves as the decoupled unmanaged process, and is separated from the runtime and not managed by the runtime. A decoupling process manager may be provided to manage all auxiliary processes, to facilitate deployment by a final user. A decoupling process includes a real-time operation process and a long connection process, and further includes another user-defined process, such as a software process or service.

### (3) Real-time operation process

The real-time operation is a specific operation, and requires quite high performance and strict real-time execution. The operation usually needs to be limited within millisecond-level execution time. Because an event-based runtime is not a real-time system, the real-time operation should be decoupled into a single process, and is not controlled by event-based runtime workflow orchestration. The function block process manages only a register and a callback hook.

### (4) Long connection process

Some hardware devices need to remain online. In this case, a long connection needs to be made to the device. The runtime starts and manages, by the decoupling process manager, the long connection decoupled from the function block process. The function block process has only an interface-level connection of the long connection process.

### (5) Control isolation calling program

The control isolation calling program is configured to exchange data between the function block process and another decoupling process. The runtime requires a control isolation calling program implemented by message interoperability (a packaging layer of any message broker) to exchange a message. The control isolation calling program may support a publishing/subscription mode or another customizable cross-process message transfer system independent of an operating system.

In an implementation, the method 800 further includes: enabling, during execution of a start node of the workflow, the auxiliary process to establish the long connection. Therefore, the auxiliary process establishes the long connection when execution of the workflow is started, so that an overall running speed of the workflow is improved.

In an implementation, the method 800 further includes: enabling, during execution of an end node of the workflow, the auxiliary process to disconnect the long connection. Therefore, the auxiliary process disconnects the long connection when execution of the workflow ends, so that a connection resource is saved.

In an implementation, when the function block process needs to access the resource, the function block process is enabled to establish the first idempotent short connection, to call the auxiliary process through the first idempotent short connection, so as to access the resource through the long connection, or the function block process is enabled to establish the second idempotent short connection, to access the resource through the second idempotent short connection. It can be learned that, the function block may access the resource through the first idempotent short connection and the long connection, or may access the resource directly through the second idempotent short connection. There are a plurality of implementations.

In an example implementation, when the function block process needs to end accessing the resource, the function block process is enabled to end the first idempotent short connection and/or end the second idempotent short connection. Therefore, when accessing the resource ends, the function block may further end the idempotent short connection to save a connection resource.

In an implementation, the function block process calls the long connection through a caller that has interoperability; and the resource includes at least one of the following: hardware detection data; software running in an internal storage; and a hardware driver. Therefore, data may be conveniently exchanged between the function block process and the auxiliary process through the caller, and a capability that different computer systems, networks, operating systems, and application programs work together and share information can be implemented based on the interoperability.

In an implementation, the method 800 further includes: generating, based on the configuration information, a real-time operation process adapted to be called by the function block process, where the real-time operation process is adapted to host a long connection with the resource and provide a real-time operation capability that is based on the resource; and enabling, when the function block process needs to be provided with the real-time operation capability, the function block process to establish a third idempotent short connection, to call the real-time operation process through the third idempotent short connection, so as to obtain the real-time operation capability. Therefore, the real-time operation process is generated, so that the function block process can further have the real-time operation capability.

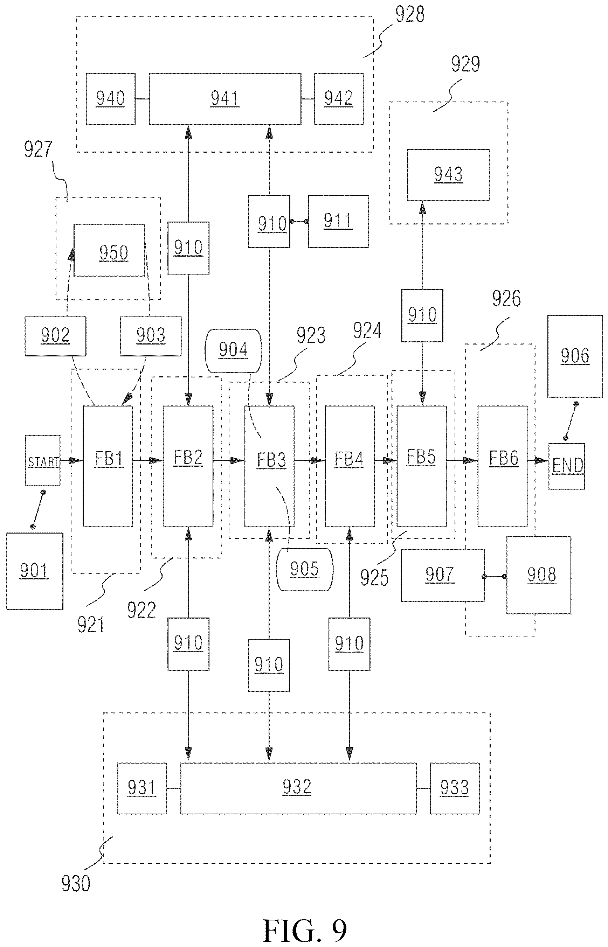

FIG. 9 is an example diagram of workflow execution according to an embodiment of the present application. In FIG. 9, function blocks in a workflow include FB1 to FB6, and an execution order of the function blocks is shown by linking arrows between the function blocks FB1 to FB6 in FIG. 9. Correspondingly, when the workflow is executed by a runtime, separate processes corresponding to the function blocks are generated, that is, respective function block processes 921 to 926 respectively corresponding to FB1 to FB6 are generated. The execution order of the function block processes 921 to 926 is shown by the linking arrows between the function blocks FB1 to FB6 in FIG. 9. To be specific, the function block process 921 is first executed, then the function block process 922 is executed, ..., and the function block process 926 is last executed.

A plurality of auxiliary processes running in the runtime may be configured based on configuration information. As shown in FIG. 9, the auxiliary process specifically includes a hardware monitoring process 928, an internal storage process 929, and a hardware driving process 930. In an implementation, the auxiliary process is already started in advance by a main process of the runtime. In this case, a resource attribute of the auxiliary process started by the main process of the runtime may be configured based on the configuration information. For example, based on a quantity of sensors and types of the sensors included in the configuration information, a sensor to which the hardware monitoring process 928 is connected based on the long connection is configured. Based on a quantity of hardware drivers and types of the hardware drivers included in the configuration information, a hardware driver to which the hardware driving process 930 is connected based on the long connection is configured.

In an implementation, a specified auxiliary process may be further started based on the configuration information. In this case, the configuration information further includes an identifier of the specified auxiliary process, and the auxiliary process corresponding to the identifier is started based on the configuration information. For example, the configuration information includes an identifier of the hardware monitoring process 928, a quantity of sensors, and types of the sensors. The runtime first starts the hardware monitoring process 928 based on the configuration information, and then a sensor to which the hardware monitoring process 928 is connected based on the long connection is configured based on the quantity of sensors and the types of the sensors included in the configuration information.

The workflow further includes a start (Start) node of an initial execution order of the workflow and an end node (End) of a final execution order of the workflow.

When execution of the runtime reaches the start node, an overall initialization operation 901 is performed (including: the hardware monitoring process 928 performs initialization 931 on monitored hardware (for example, a temperature sensor and a humidity sensor) and the hardware driving process 930 performs initialization 931 on driven hardware). Then, the hardware monitoring process 928, the internal storage process 929, and the hardware driving process 930 respectively establish long connections to respective resources. The hardware monitoring process 928 establishes a long connection 941 with the monitored hardware. The internal storage process 929 establishes a long connection 943 with a running program in an internal storage. The hardware driving process 930 establishes a long connection 932 with a driver of the driven hardware.

Then, the runtime executes the function block processes 921 to 926 according to an order, where a next function block process is executed after execution of a previous function block process is completed. In FIG. 9, the function block processes 922 to 926 are respectively connected with respective auxiliary processes through respective callers 910. Preferably, each caller 910 further includes interoperability 911.

In an execution process of each function block process, when internal execution logic of the function block process determines that access to a resource is required, the function block process establishes an idempotent short connection, to call a auxiliary process through the idempotent short connection, so as to access the resource through a long connection between the auxiliary process and the resource. For example, the function block process 923 is used as an example. When the function block process 923 needs to obtain sensor data, the function block process 923 performs processing 904 of starting a short connection, to start an idempotent short connection with the hardware monitoring process 928. The function block process 923 accesses, based on the idempotent short connection, the hardware monitoring process 928 through the caller 910 that has the interoperability 911. The hardware monitoring process 928 provides, to the function block process 923, the sensor data obtained through the hardware monitoring long connection 941 with a sensor. Then, the function block process 923 performs short connection disconnection processing 905, to disconnect the idempotent short connection from the hardware monitoring process 928.

Optionally, during execution of each function block process, when internal execution logic of the function block process determines that the resource needs to be accessed, the function block process may establish the idempotent short connection to directly access the resource. For example, the function block process 926 is used as an example. When the function block process 926 needs to access the hardware driver, the function block process 926 performs a short connection start operation, to start the idempotent short connection with the hardware driver. The function block process 926 may access the hardware driver after the idempotent short connection between the function block process 926 and the hardware driver is established. After the function block process 926 completes accessing the hardware driver, the function block process 923 performs an operation of disconnecting the short connection, to disconnect the idempotent short connection from the hardware driver.

In addition, a real-time operation process 927 adapted to be called by the function block process 921 may be generated based on the configuration information. The real-time operation process 927 has a long connection with the resource and has a real-time operation capability of implementing real-time operation short processing 950 based on the resource. The function block process 921 is used as an example. When the function block process 921 needs to call the real-time operation short processing 950, the function block process 921 performs short connection start processing, to start the idempotent short connection with the real-time operation process 927. The function block process 921 performs real-time registration 902 on the real-time operation short processing 950 based on the idempotent short connection. The real-time operation short processing 950 provides a processing result generated based on the long connection with the resource to the function block process 921 through real-time callback 903. Then, the function block process 921 performs short connection disconnection processing, to disconnect the idempotent short connection from the real-time operation process 927.

When execution of the runtime reaches the end node, a reset operation 906 is performed (including: the hardware monitoring process 928 performs resetting 942 on the monitored hardware (for example, a temperature sensor and a humidity sensor) and the hardware driving process 930 performs resetting 933 on the driven hardware). Then, the hardware monitoring process 928, the internal storage process 929, and the hardware driving process 930 respectively disconnect long connections with respective resources.

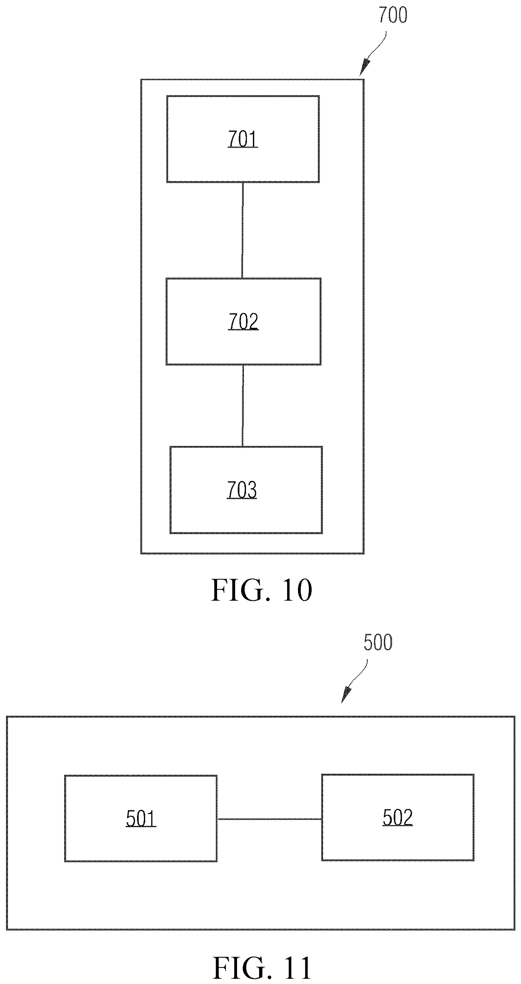

FIG. 10 is a diagram of an example of a structure of a workflow execution apparatus according to an embodiment of the present application. A workflow execution apparatus 700 includes:
an obtaining module 701, configured to obtain a workflow and configuration information, where the workflow is generated based on a behavior tree construction operation performed by a user on a graphical user interface; a configuration module 702, configured to configure, based on the configuration information, a auxiliary process adapted to provide a resource for the workflow, where the auxiliary process is adapted to host a long connection with the resource; and a generation module 703, configured to generate a function block process adapted to execute a function block in the workflow, where the function block process is adapted to host a first idempotent short connection with the auxiliary process and/or a second idempotent short connection the resource, and the auxiliary process is decoupled from the function block process.

In an implementation, the generation module 703 is further configured to enable, during execution of a start node of the workflow, the auxiliary process to establish the long connection. In an implementation, the generation module 703 is further configured to enable, during execution of an end node of the workflow, the auxiliary process to disconnect the long connection. In an implementation, the generation module 703 is further configured to: when the function block process needs to access the resource, enable the function block process to establish the first idempotent short connection, to call the auxiliary process through the first idempotent short connection, so as to access the resource through the long connection, or enable the function block process to establish the second idempotent short connection, to access the resource through the second idempotent short connection. In an implementation, the generation module 703 is further configured to: when the function block process needs to end accessing the resource, enable the function block process to end the first idempotent short connection and/or end the second idempotent short connection. In an implementation, the function block process calls the long connection through a caller that has interoperability; and the resource includes at least one of the following: hardware detection data; software running in an internal storage; and a hardware driver and the like.

In an implementation, the generation module 703 is further configured to generate, based on the configuration information, a real-time operation process adapted to be called by the function block process, where the real-time operation process is adapted to host a long connection with the resource and provide a real-time operation capability based on the resource; and enable, when the function block process needs to be provided with the real-time operation capability, the function block process to establish a third idempotent short connection, to call the real-time operation process through the third idempotent short connection, so as to obtain the real-time operation capability.

FIG. 11 is a diagram of an example of a structure of a workflow execution apparatus that has a memory-processor architecture according to embodiments of the present application. A workflow execution apparatus 500 includes: at least one memory 501 and at least one processor 502. The at least one processor 502 is configured to invoke a computer program stored in the at least one memory 501, to perform the workflow execution method according to embodiments of the present application.

Specifically, a system or an apparatus provided with a storage medium may be provided, where the storage medium stores computer-readable code that implements functions of any one of the implementations of the foregoing embodiments, and a computer (or a CPU or an MPU) of the system or the apparatus is enabled to read and execute the computer-readable code stored in the storage medium. In addition, an operating system or the like operating on a computer may be enabled, based on instructions of the computer-readable code, to complete some or all of actual operations. The computer-readable code read from the storage medium may alternatively be written into a memory disposed in an expansion board inserted into the computer or into a memory disposed in an expansion unit connected to the computer, and then a CPU or the like mounted on the expansion board or the expansion unit is enabled, based on instructions of the computer-readable code, to perform some or all of actual operations, to implement the functions of any one of the foregoing implementations. In the embodiments, embodiments of the computer-readable medium include, but are not limited to, a floppy disk, a CD-ROM, a magnetic disk, and an optical disc (such as a CD-ROM, a CD-R, a CD-RW, a DVD-ROM, a DVD-RAM, a DVD-RW, a DVD + RW), a memory chip, a ROM, a RAM, an ASIC, a configured processor, an all-optical medium, all magnetic tapes or other magnetic media, or any other medium from which a computer processor can read instructions. In addition, various other forms of the computer-readable medium may transmit the instructions to the computer or host the instructions, including a router, a private or public network, or other wired or wireless transmission devices or channels. For example, the computer-readable instructions may be downloaded from a server computer or a cloud by a communication network. The instructions may include code in any computer programming language, including C, C++, C language, Visual Basic, Java, and JavaScript.

It should be noted that, not all steps and modules in the procedures and the diagrams of the system structures are necessary, and some steps or modules may be omitted according to an actual requirement. An execution sequence of the steps is not fixed and may be adjusted according to a requirement. The apparatus structure described in the embodiments may be a physical structure or a logical structure. That is, some modules may be implemented by the same physical entity, or some modules may be implemented by a plurality of physical entities, or may be implemented by some components in a plurality of independent devices together.

The foregoing descriptions are merely preferred embodiments of the present invention, but are not intended to limit the present invention. Any modification, equivalent replacement, or improvement made within the spirit and principle of the present invention shall fall within the protection scope of the present invention.

## Claims

1. A workflow execution method (800), comprising:
obtaining a workflow and configuration information, wherein the workflow is generated based on a behavior tree construction operation performed by a user on a graphical user interface (801);
configuring, based on the configuration information, an auxiliary process adapted to provide a resource for the workflow, wherein the auxiliary process is adapted to host a long connection with the resource (802); and
generating a function block process adapted to execute a function block in the workflow, wherein the function block process is adapted to host a first idempotent short connection with the auxiliary process and/or a second idempotent short connection with the resource, and the auxiliary process is decoupled from the function block process (803).

2. The workflow execution method (800) according to claim 1, wherein the method (800) further comprises:
enabling, during execution of a start node of the workflow, the auxiliary process to establish the long connection.

3. The workflow execution method (800) according to claim 1, wherein the method (800) further comprises:
enabling, during execution of an end node of the workflow, the auxiliary process to disconnect the long connection.

4. The workflow execution method (800) according to claim 1, wherein when the function block process needs to access the resource, the function block process is enabled to establish the first idempotent short connection, to call the auxiliary process through the first idempotent short connection, so as to access the resource through the long connection, or the function block process is enabled to establish the second idempotent short connection, to access the resource through the second idempotent short connection.

5. The workflow execution method (800) according to claim 1, wherein when the function block process needs to end accessing the resource, the function block process is enabled to end the first idempotent short connection and/or end the second idempotent short connection.

6. The workflow execution method (800) according to any one of claims 1 to 5, wherein the function block process calls the long connection through a caller that has interoperability; and
the resource comprises at least one of the following:
hardware detection data; software running in an internal storage; and a hardware driver.

7. The workflow execution method (800) according to any one of claims 1 to 5, wherein the method (800) further comprises:
generating, based on the configuration information, a real-time operation process adapted to be called by the function block process, wherein the real-time operation process is adapted to host a long connection with the resource and provide a real-time operation capability that is based on the resource; and
enabling, when the function block process needs to be provided with the real-time operation capability, the function block process to establish a third idempotent short connection, to call the real-time operation process through the third idempotent short connection, so as to obtain the real-time operation capability.

8. A workflow execution apparatus (700), comprising:
an obtaining module (701), configured to obtain a workflow and configuration information, wherein the workflow is generated based on a behavior tree construction operation performed by a user on a graphical user interface;
a configuration module (702), configured to configure, based on the configuration information, an auxiliary process adapted to provide a resource for the workflow, wherein the auxiliary process is adapted to host a long connection with the resource; and
a generation module (703), configured to generate a function block process adapted to execute a function block in the workflow, wherein the function block process is adapted to host a first idempotent short connection with the auxiliary process and/or a second idempotent short connection with the resource, and the auxiliary process is decoupled from the function block process.

9. The workflow execution apparatus (700) according to claim 8, wherein
the generation module (703) is further configured to enable, during execution of a start node of the workflow, the auxiliary process to establish the long connection.

10. The workflow execution apparatus (700) according to claim 8, wherein
the generation module (703) is further configured to enable, during execution of an end node of the workflow, the auxiliary process to disconnect the long connection.

11. The workflow execution apparatus (700) according to claim 8, wherein
the generation module (703) is further configured to: when the function block process needs to access the resource, enable the function block process to establish the first idempotent short connection, to call the auxiliary process through the first idempotent short connection, so as to access the resource through the long connection, or enable the function block process to establish the second idempotent short connection, to access the resource through the second idempotent short connection.

12. The workflow execution apparatus (700) according to claim 8, wherein
the generation module (703) is further configured to: when the function block process needs to end accessing the resource, enable the function block process to end the first idempotent short connection and/or end the second idempotent short connection.

13. The workflow execution apparatus (700) according to any one of claims 8 to 12, wherein the function block process calls the long connection through a caller that has interoperability; and
the resource comprises at least one of the following:
hardware detection data; software running in an internal storage; and a hardware driver.

14. The workflow execution apparatus (700) according to any one of claims 8 to 12, wherein
the generation module (703) is further configured to generate, based on the configuration information, a real-time operation process adapted to be called by the function block process, wherein the real-time operation process is adapted to host a long connection with the resource and provide a real-time operation capability that is based on the resource; and enable, when the function block process needs to be provided with the real-time operation capability, the function block process to establish a third idempotent short connection, to call the real-time operation process through the third idempotent short connection, so as to obtain the real-time operation capability.

15. A workflow execution apparatus (500), comprising:
at least one memory (501), configured to store computer-readable code; and
at least one processor (502), configured to call the computer-readable code, to perform the steps of the workflow execution method (800) according to any one of claims 1 to 7.

16. A computer-readable medium, wherein the computer-readable medium stores computer-readable instructions, and when executed by a processor, the computer-readable instructions enable the processor to perform the steps of the workflow execution method (800) according to any one of claims 1 to 7.

17. A computer program product, wherein the computer program product is tangibly stored in a computer-readable medium and comprises computer-readable instructions, and when executed, the computer-readable instructions enable at least one processor to perform the steps of the workflow execution method (800) according to any one of claims 1 to 7.
